# EUROPEAN PATENT SPECIFICATION

(11) **EP 4 015 182 B1**
(45) Date of publication and mention of the grant of the patent: **09.09.2026**
(21) Application number: 21201143.1
(22) Date of filing: 06.10.2021
(51) Int. Cl.: B29C 33/48, B29C 70/40

(54) **SEGMENTED MANDREL FOR COMPOSITE FABRICATION**
SEGMENTIERTER DORN ZUR HERSTELLUNG VON VERBUNDWERKSTOFFEN
MANDRIN SEGMENTÉ POUR FABRICATION COMPOSITE

(30) Priority: 18.12.2020 US 202063127918 P
(43) Date of publication of application: 22.06.2022
(73) Proprietor: The Boeing Company, Arlington, VA 22202 (US)
(72) Inventor: Schwabel, Anne Jennifer, Chicago, IL, 60606-1596 (US); Ingram Jr., William Henry, Chicago, IL, 60606-1596 (US); Kroon, James Edward, Chicago, IL, 60606-1596 (US); Barwick, Andy, Chicago, IL, 60606-1596 (US)
(74) Representative: Hoffmann Eitle

(56) References cited:
- EP-A2- 2 747 987
- WO-A1-2018/101420
- WO-A2-2007/148301
- CA-A1- 2 299 487
- CN-A- 104 924 628
- US-A1- 2006 180 704
- US-A1- 2006 231 682
- US-A1- 2013 220 521
- US-A1- 2020 070 443

## Description

### BACKGROUND INFORMATION

### 1. Field:

The present disclosure relates generally to manufacturing composite parts and, in particular, to manufacturing composite parts using segmented mandrels.

### 2. Background:

Aircraft manufacturers use composite materials for commercial airplanes to reduce weight. Weight reduction results in fuel savings, thus decreasing the cost to operate a commercial airplane. Further, the use of composite materials also results in less scheduled maintenance as compared to non-composite structures. Further, the use of composite materials to form a composite structure in a commercial airplane can also reduce non-routine maintenance. For example, using composite materials for structural components such as floor beams can reduce the need to replace the structures as compared to using aluminum floor beams.

Manufacturing large composite structures such as fuselage sections can be challenging. Currently used manufacturing systems typically involve extensive complex fixtures and labor-intensive assembly procedures to manufacture large composite structures such as fuselage sections for commercial aircraft.

For example, composite materials can be laid up on a rotating mandrel and multiple layers of pre-preg comprising composite fibers pre-impregnated with thermoplastic resin can be applied to the rotating mandrel to form the fuselage section. Using a rotating mandrel can be more complex and labor-intensive than desired.

As another example, fuselage halves or quarter panels can be formed on mandrels. These fuselage halves or quarter panels can be joined along longitudinal joints to form a complete fuselage section. These techniques can be more complex and time-consuming than desired.

Therefore, it would be desirable to have a method and apparatus that take into account at least some of the issues discussed above, as well as other possible issues. For example, it would be desirable to have a method and apparatus that overcome a technical problem with manufacturing composite structures.

EP 2 747 987 A2, according to its abstract, states a vacuum bag placed around the inner forming surface of an inner mandrel with radially retractable sectors having parallel longitudinal slots. Stringers of composite material are positioned in the slots. A respective elongated inner support is placed in each stringer, covered by an impermeable tubular bag. A skin of composite material is laminated around the stringers, the coated supports and the inner forming surface. An outer curing tool closes around the skin defining an outer forming surface for the fuselage barrel, leaving an annular gap of predetermined radial width between the outer surface of the skin and the outer forming surface. Vacuum is applied to the volume enclosed between the vacuum bag and the outer tool, so as to enlarge the diameter of the uncured barrel, causing the barrel to be released from the inner mandrel and bringing the outer surface of the skin into contact with the inner surface of the outer tool.

WO 2018/101420 A1, according to its abstract, states a mold for producing a composite material structure is provided with a plurality of segments having side surfaces that can be joined to each other and in which a seal groove is provided to at least one of adjacent side surfaces; a pair of annular holding members that individually fix both end surfaces of each of the segments and maintain the result as a single structure; and a seal member that, when inserted in the seal groove, seals the area between segments as a result of the side surfaces of the segments being joined. The seal member is linear, has an edge, and has a lip section provided to the upper part of the seal thereof. Either a cavity is formed in the interior of the lip section or a recess is formed in at least the bottom part of the seal. As a result, good sealing is achieved between adjacent segments and it is possible to minimize or avoid complications in the production of a hollow composite material structure.

### SUMMARY

The invention is defined in the independent claims. An embodiment of the present disclosure provides a mandrel system comprising a frame, segments, a connection system, and a seal system. The segments are connected to the frame. The segments provide an inner mold line for a composite structure. The connection system connects the segments to the frame. The seal system seals segment-to-segment joints in locations where the segments are joined to each other.

Another embodiment of the present disclosure provides a method for forming a composite structure. Segments are selected for the composite structure. The segments are connected to a frame using a connection system. The segments define an inner mold line in a mandrel system shaped to fabricate the composite structure when the segments are connected to the frame. Segment-to-segment joints between the segments connected to the frame are sealed using a seal system when the segments are connected to the frame.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a perspective view of a mandrel system in accordance with an illustrative embodiment;
**Figure 2** is an illustration of an enlarged perspective view of a section of a side of a segmented mandrel in accordance with an illustrative embodiment;
**Figure 3** is an illustration of an exploded perspective view of a mandrel system in accordance with an illustrative embodiment;
**Figure 4** is an illustration of an exploded end view of a mandrel system in accordance with an illustrative embodiment;
**Figure 5** is an illustration of an enlarged view of a first side segment and a center segment in accordance with an illustrative embodiment;
**Figure 6** is an illustration of a cross-sectional view of a first side segment placed on a frame in accordance with an illustrative embodiment;
**Figure 7** is an illustration of a cross-sectional view of a first side segment and a center segment connected to a frame in accordance with an illustrative embodiment;
**Figure 8** is an illustration of a perspective view of a portion of a first side segment on a frame in accordance with an illustrative embodiment;
**Figure 9** is an illustration of a perspective view of a clamp in accordance with an illustrative embodiment;
**Figure 10** is an illustration of a cross-sectional view of a clamp and an engagement structure in accordance with an illustrative embodiment;
**Figure 11** is an illustration of a perspective view of a connection of a first side segment to a frame in accordance with an illustrative embodiment;
**Figure 12** is an illustration of a bottom view of a management system in accordance with an illustrative embodiment;
**Figure 13** is an illustration of a perspective view of a mandrel system with a blocker in accordance with an illustrative embodiment;
**Figure 14** is an illustration of a cross-sectional view of diverters in a first side segment and a center segment connected to a frame in accordance with an illustrative embodiment;
**Figure 15** is an illustration of a perspective view of a partially assembled mandrel system for a wing in accordance with an illustrative embodiment;
**Figure 16** is an illustration of a perspective view of an assembled mandrel system for a wing in accordance with an illustrative embodiment;
**Figure 17** is an illustration of an enlarged perspective view of a portion of a segment-to-segment joint in a segmented mandrel in accordance with an illustrative embodiment;
**Figure 18** is an illustration of a product manufacturing environment in accordance with an illustrative embodiment;
**Figure 19** is an illustration of a flowchart of a process for forming a composite structure in accordance with an illustrative embodiment;
**Figure 20** is another illustration of a flowchart of a process for forming a composite structure in accordance with an illustrative embodiment;
**Figure 21** is yet another illustration of a flowchart of a process for forming a composite structure in accordance with an illustrative embodiment;
**Figure 22** is still another illustration of a flowchart of a process for forming a composite structure in accordance with an illustrative embodiment;
**Figure 23** is an illustration of an aircraft manufacturing and service method in accordance with an illustrative embodiment;
**Figure 24** is an illustration of a block diagram of an aircraft in which an illustrative embodiment may be implemented; and
**Figure 25** is an illustration of a block diagram of a product management system in accordance with an illustrative embodiment.

### DETAILED DESCRIPTION

The illustrative embodiments recognize and take into account one or more different considerations. For example, the illustrative embodiments recognize and take into account that composite layers can be laid up through fiber placement using tows or tape that are placed onto a rotating mandrel. The illustrative embodiments recognize and take into account that the equipment for dispensing and clamping tows onto the rotating mandrel can be more complex and time-consuming than desired.

The illustrative embodiments recognize and take into account that the complexity in manufacturing a fuselage section can be reduced through the use of segmented mandrels that can be joined to each other to form an inner mold line laying up uncured composite materials for the composite structure. The illustrative embodiments recognize and take into account that increasing precision in aligning the segments can reduce undesired inconsistencies and markings at the joints where the segments meet each other. Further, the illustrative embodiments recognize and take into account that increasing the quality of the seal at these joints can also reduce undesired inconsistencies and markings at these segment-to-segment joints.

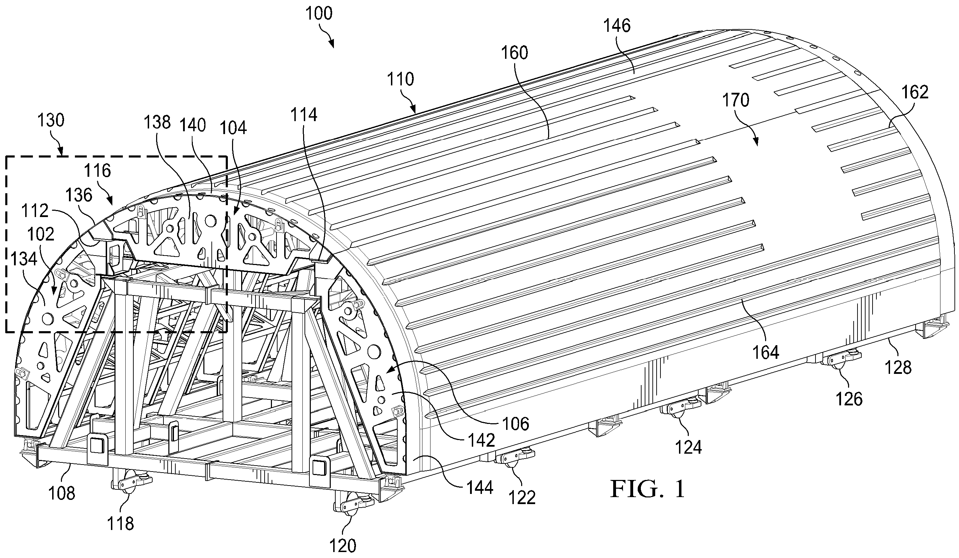

With reference now to the figures and, in particular, with reference to **Figure 1****,** an illustration of a perspective view of a mandrel system is depicted in accordance with an illustrative embodiment. In this depicted example, mandrel system **100** is shown in a perspective view and comprises first side segment **102,** center segment **104,** second side segment **106,** and frame **108.** In this depicted example, these four components in mandrel system **100** are shown in an assembled form and, in this form, can be used in manufacturing a fuselage half for an aircraft. These components can be comprised of a metal alloy such as Invar, which is a nickel-iron alloy that is also referred to FeNi36 or 64FeNi.

In the illustrative example, first side segment **102** and second side segment **106** are placed on frame **108.** Thereafter, center segment **104** is placed on first side segment **102** and second side segment **106.** The order in which these segments are placed on frame **108** can change in other examples. For example, center segment **104** can be placed on frame **108** prior to placing first side segment **102** and second side segment **106** on frame **108** in another illustrative example.

In the illustrative example, these segments are indexed to frame **108.** In other words, features in a connection system are present (not shown) that enable aligning these components with a desired position with respect to each other. These features can provide for indexing or placing the segments in positions relative to each other to provide a desired level of alignment of the segments. As depicted, center segment **104** is the last segment installed during assembly of mandrel system **100** and the first segment removed during disassembly of mandrel system **100.**

The assembly of these components in mandrel system **100** forms an integral structure ready for laying up composite materials and curing them to form a fuselage half. The assembled form of these components for mandrel system **100** can form segmented mandrel **110.**

In this illustrative example, independent manufacturing operations can be performed on each of the individual segments prior to assembly of mandrel system **100** to form segmented mandrel **110.** In this illustrative example, rotation of segmented mandrel **110** is unnecessary in laying up uncured composite materials on segmented mandrel **110.**

As depicted, seals are present at segment-to-segment joint **112** and segment-to-segment joint **114** when the segments are connected to each other through a connection system (not shown). These joints extend along the length of segmented mandrel **110** and can be seen more clearly at end **116** of segmented mandrel **110.** As depicted, segment-to-segment joint **112** is present wherein first side segment **102** contacts center segment **104.** Segment-to-segment joint **114** is present where second side segment **106** contacts center segment **104.**

As depicted, each segment comprises a support structure, such as a segment frame, and a mold line section. Segment frames are connected to frame **108** and mold line sections are configured to provide a surface on which a composite structure can be formed. The mold line sections of the segments can include features that translate into the features for the composite structure. For example, the features can include groups of channels for hat stringers in the fuselage half.

In this example, first side segment **102** comprises segment frame **134** and mold line section **136.** Center segment **104** comprises segment frame **138** and mold line section **140,** and second side segment **106** comprises segment frame **142** and mold line section **144.** The assembly of first side segment **102,** center segment **104,** and second side segment **106** on frame **108** defines inner mold line **146** for the fuselage half.

In this illustrative example, inner mold line **146** is the surface on which composite materials can be laid up to fabricate the fuselage half. Inner mold line **146** defines the dimensions and features on the inside portion of the fuselage half manufactured using segmented mandrel **110.**

For example, channels, such as channel **160,** channel **162,** and channel **164** represent locations for stringers. As depicted, flat area **170** is an area in which features such as at least one of a passenger door, a cargo door, a window, or some other opening may be located. In this illustrative example, these features defined by inner mold line **146** represent features located on the inner portion of the fuselage half when manufacturing the fuselage half.

In this example, the segments can be formed from materials such as a metal or a metal alloy. For example, the segments can be formed from Invar. The segment frame and a mold line section for each segment are connected to each other.

When one component is "connected" to another component, the connection is a physical association. For example, a first component, a mold line section, can be considered to be physically connected to a second component, a segment frame, by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

Further, segmented mandrel **110** can be moved by a movement system comprising wheels such as wheel unit **118,** wheel unit **120,** wheel unit **122,** wheel unit **124,** and wheel unit **126** located on bottom side **128** of frame **108.** These wheels can be configured to be moved on at least one of a floor, a rail system, or some other surface in a manufacturing facility.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

In this example, when assembled, mandrel system **100** can have a length of about 38.5 feet, a height of about 12 feet, and a width of about 16 feet. In other illustrative examples, other dimensions can be used depending on the size of the fuselage half being fabricated. The illustration of mandrel system **100** for a fuselage half is only presented as an example of one manner in which mandrel system **100** can be implemented.

Further, mandrel system **100** can have other shapes and configurations depending on the particular implementation. For example, the configuration of mandrel system **100** can be different for other types of composite parts such as a missile bottom, a rocket booster, a fuel tank, a wing, or some other type of composite part. Further, other components can be used with mandrel system **100** to fabricate a fuselage half. For example, at least one of caul plates, stringer bladders, bladder end filling covers, vacuum bagging films, or other components may be used with mandrel system **100.**

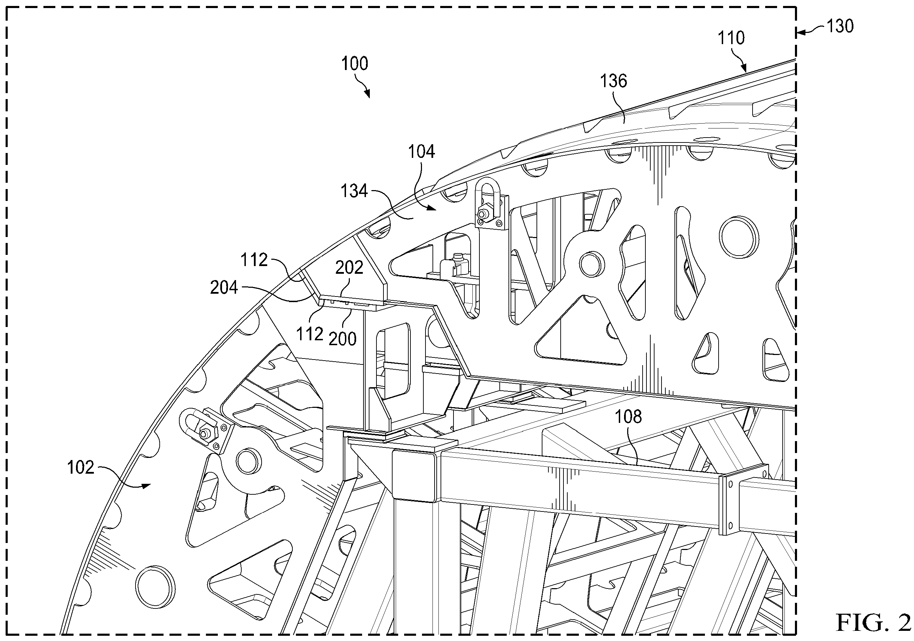

A more detailed description of segment-to-segment joint **112** of segmented mandrel **110** in section **130** is depicted in **Figure 2****.** With reference to **Figure 2****,** an illustration of an enlarged perspective view of a section of a side of a segmented mandrel is depicted in accordance with an illustrative embodiment. In the illustrative examples, the same reference numeral may be used in more than one figure. This reuse of a reference numeral in different figures represents the same element in the different figures. An enlarged perspective view of segment-to-segment joint **112** on end **116** of segmented mandrel **110** in section **130** in **Figure 1** is illustrated.

In this enlarged view, first seal structure **200** is located on first side segment **102.** Second seal structure **202** is located on center segment **104.** In this example, first seal structure **200** has a hardness that is less than second seal structure **202.** First seal structure **200** is comprised of an elastomer or rubber, and second seal structure **202** is comprised of Invar or some other suitable metal or metal alloy in this example.

As depicted in this view, seal **204** is present with first seal structure **200** contacting second seal structure **202** when first side segment **102** and center segment **104** are connected to frame **108.** This connection is performed in a manner that applies compressive force to form seal **204.** In this example, the compressive force is applied by at least one of first seal structure **200** or second seal structure **202.**

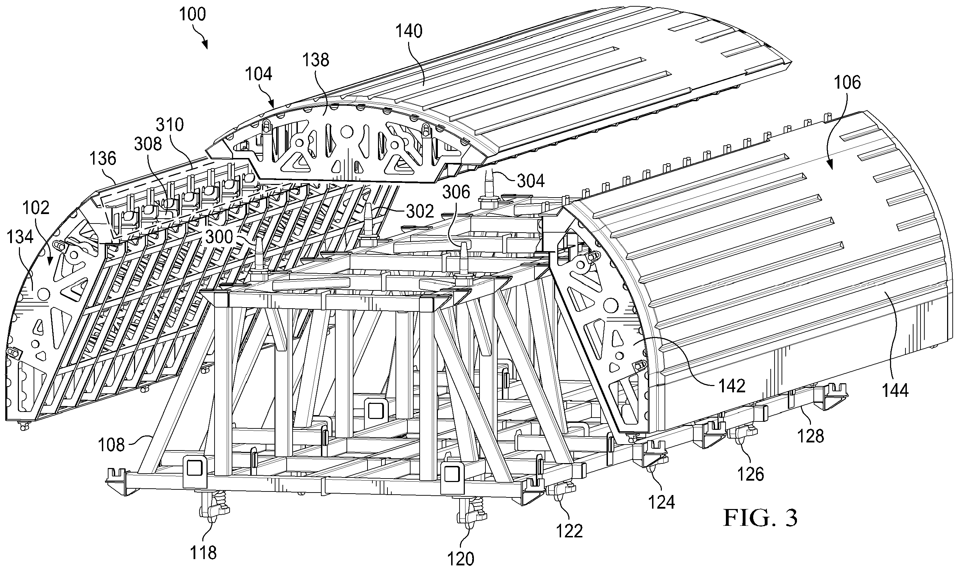

With reference next to **Figure 3****,** an illustration of an exploded perspective view of a mandrel system is depicted in accordance with an illustrative embodiment. In this figure, components for a connection system for mandrel system **100** can be seen in this exploded view. Alignment pin **300,** alignment pin **302,** alignment pin **304,** and alignment pin **306** are alignment pins connected to frame **108** that can be seen in this exploded view of mandrel system **100.**

These alignment pins provide structures to align placement of first side segment **102,** center segment **104,** and second side segment **106** on frame **108.** In other words, these alignment pins can be used to provide indexing of the segments on frame **108.**

The alignment pins can be received in sockets on the segments. As seen in this view, alignment pin **300** can be received in socket **308** on first side segment **102.** In this illustrative example, the sockets are present in all of the segments even though the sockets are not seen in this exploded view.

Further, after the segments have been aligned by the alignment pins engaging the sockets, the segments can be clamped to each other and to frame **108** using clamps, such as clamps **310** seen on first side segment **102** in this exploded view.

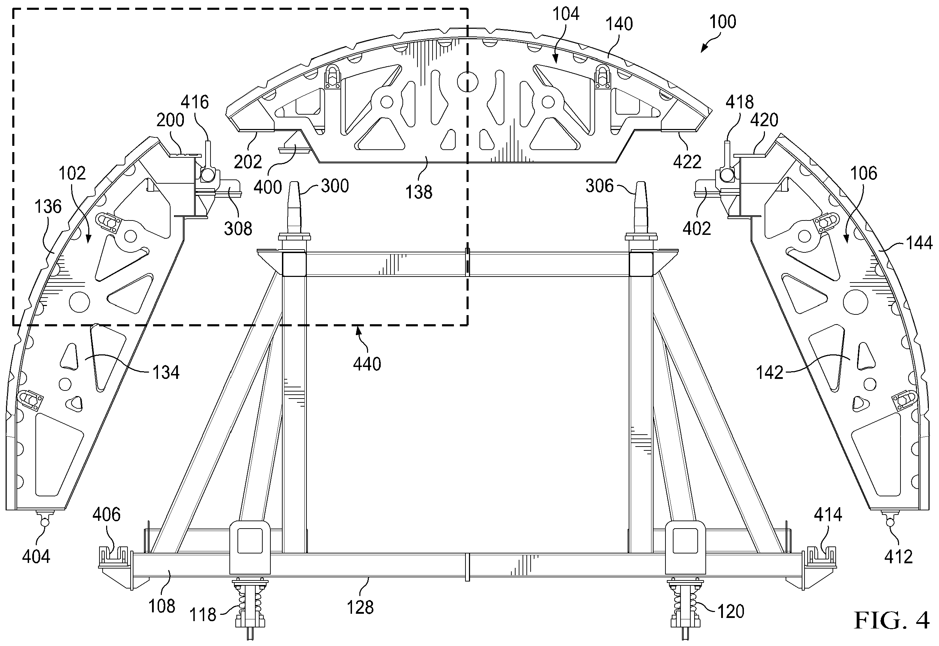

Turning to **Figure 4****,** an illustration of an exploded end view of a mandrel system is depicted in accordance with an illustrative embodiment. In this figure, an exploded view of end **116** of mandrel system **100** in **Figure 1** shows more components of a connection system for segments in mandrel system **100.**

In the illustrative example, center segment **104** has socket **400** and side segment **106** has socket **402.** The sockets are designed to receive alignment pins on frame **108** to align the segments for assembly to form segmented mandrel **110.** For example, first side segment **102** is placed onto frame **108** such that socket **308** receives alignment pin **300.** After placement of first side segment **102,** second side segment **106** is placed onto frame **108** such that socket **402** receives alignment pin **306** on frame **108.**

After both side segments have been placed onto frame **108,** center segment **104** is aligned and placed onto frame **108** such that socket **400** in center segment **104** receives alignment pin **300.**

Further, as depicted, first side segment **102** also has rod **404** that is received in channel **406** in frame **108** when first side segment **102** is aligned and placed on frame **108.** In a similar fashion, second side segment **106** has rod **412.** As depicted, rod **412** is received in slot **414** on frame **108** when second side segment **106** is placed onto frame **108.**

When first side segment **102,** center segment **104,** and second side segment **106** have been placed onto frame **108,** clamps, such as clamp **416** on first side segment **102** and clamp **418** on second side segment **106,** can be operated to engage center segment **104.** In this example, the engagement can cause a compressive force between center segment **104** and first side segment **102** and center segment **104** and second side segment **106** to secure the segments to each other on frame **108.**

In this illustrative example, first seal structure **200** on second side segment **106** and second seal structure **202** on center segment **104** are illustrated in this exploded view of mandrel system **100.**

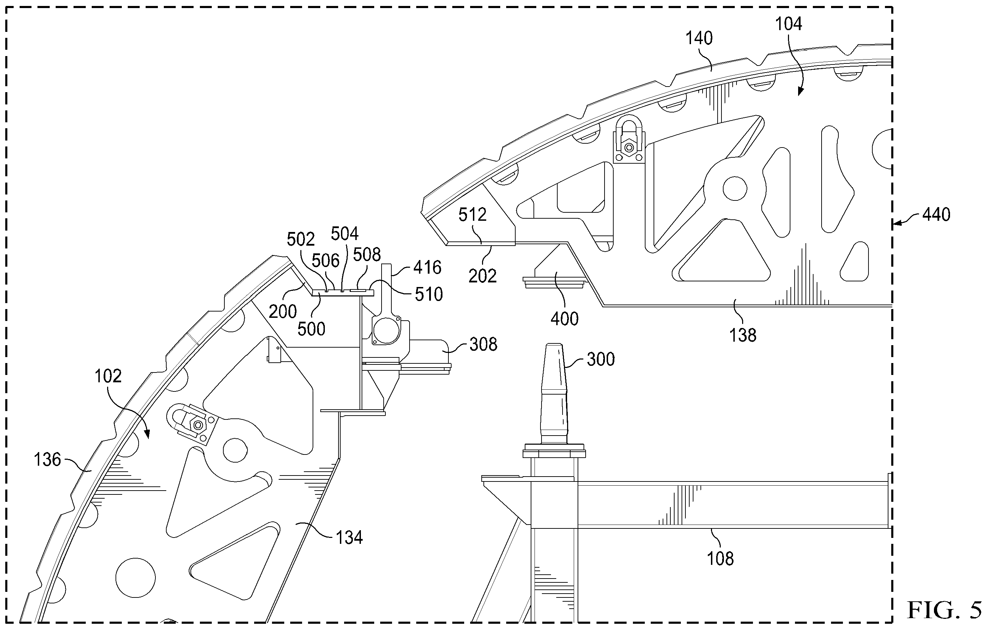

An enlarged view of components in a connection system in section **440** as well as components for forming seal **204** in **Figure 2** are depicted in **Figure 5****.** With reference now to **Figure 5****,** an illustration of an enlarged view of a first side segment and a center segment is depicted in accordance with an illustrative embodiment.

In this enlarged view of section **440,** first seal structure **200** comprises base **500** that has groove **502,** groove **504,** and seal section **506.** As depicted, shim **508** is located in base **500** of first seal structure **200.** Groove **502** and groove **504** define seal section **506** in base **500.** Shim **508** extends beyond (i.e., above) surface **510** of base **500** in first seal structure **200.**

In the illustrative example, shim **508** is comprised of a material that is harder than the material for base **500** in first seal structure **200.** For example, shim **508** can be formed from a material such as Invar, while base **500** is formed from a material such as an elastomer or rubber.

In this illustrative example, by extending above surface **510,** shim **508** is configured to maintain a gap between groove **502,** groove **504,** and segment **512,** in second seal structure **202.** In the illustrative example, a compressive force causes at least one of first seal structure **200** or second seal structure **202** to deform by a desired amount for seal **204** to function as desired. In this illustrative example, segment **512** can be comprised of a material such as Invar.

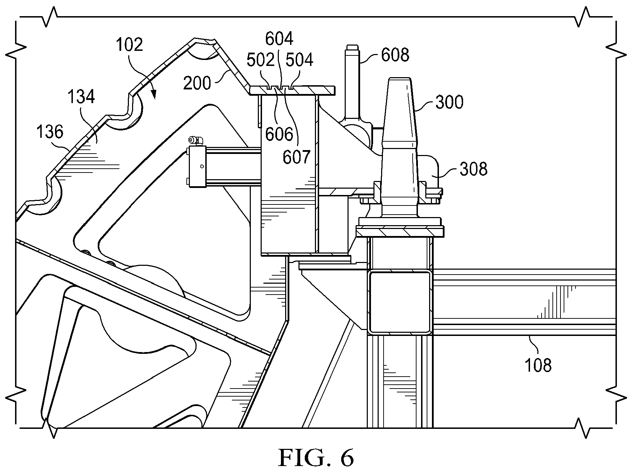

Turning next to **Figure 6****,** an illustration of a cross-sectional view of a first side segment placed on a frame is depicted in accordance with an illustrative embodiment. In this cross-sectional view, first side segment **102** has been placed onto frame **108** such that socket **308** receives alignment pin **300.** This connection of socket **308** to alignment pin **300** as well as other sockets in first side segment **102** to other alignment pins on frame **108** aligns first side segment **102** in a desired position on frame **108.**

In this cross-sectional view, groove **604** is also seen in first seal structure **200** in addition to groove **502** and groove **504.** In this illustrative example, groove **604** was not seen in **Figure 5** because this cross-sectional view is taken along a different cross-section from the cross-sectional view depicted in **Figure 5****.** In this cross-section, seal section **606** and seal segment **607** are present. Shim **508,** as illustrated in **Figure 5****,** is not seen in this cross-sectional view. Clamp **608** is behind alignment pin **300** in this view.

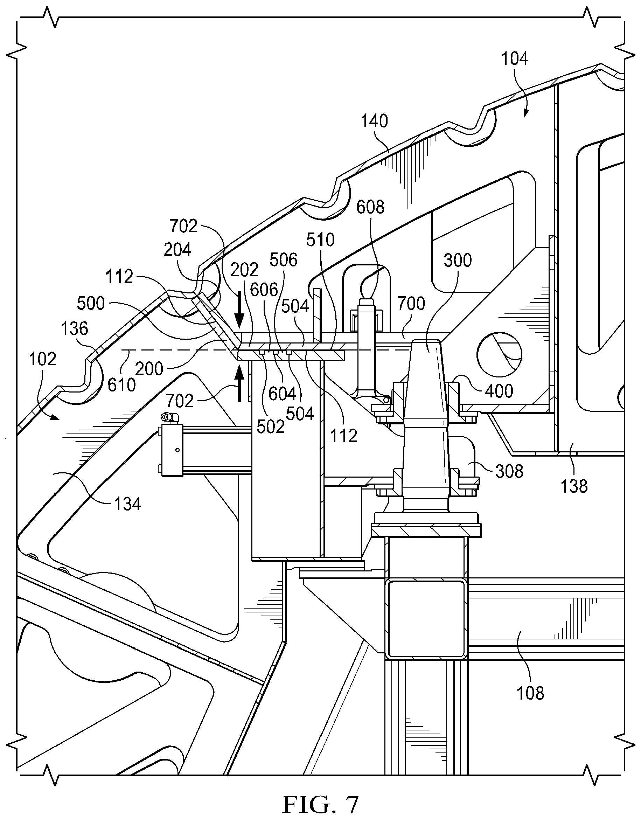

Turning next to **Figure 7****,** an illustration of a cross-sectional view of a first side segment and a center segment connected to a frame is depicted in accordance with an illustrative embodiment.

In this depicted example, center segment **104** is placed onto frame **108** after first side segment **102.** As depicted, alignment pin **300** is received by socket **400** in center segment **104.** Other alignment pins are received in other sockets (not shown) in center segment **104** that provide for aligning center segment **104** in a desired position on frame **108.**

In this illustrative example, clamp **608** can be manipulated to engage engagement structure **700** on center segment **104.** When clamp **608** and other clamps on first side segment **102** are engaged to engagement structure **700** and other engagement structures on center segment **104,** these segments are connected to frame **108.** Further, the engagement of these clamps can also cause a compressive force as shown by arrows **702** that enables seal **204** to be established at segment joint **112.**

As depicted in this example, seal **204** is formed by first seal structure **200** and second seal structure **202** along horizontal seal plane **710.** In the illustrative example, shim **508** enables fine tuning of the gap, and therefore forming the compression seals with a desired level of performance. As depicted, shim **508** provides flexibility for non-nominal conditions. Shim **508** can also enable increasing flushness at the inner mode lines (IML) through adjusting the horizontal gap in horizontal seal plane **710** in addition to seal compression.

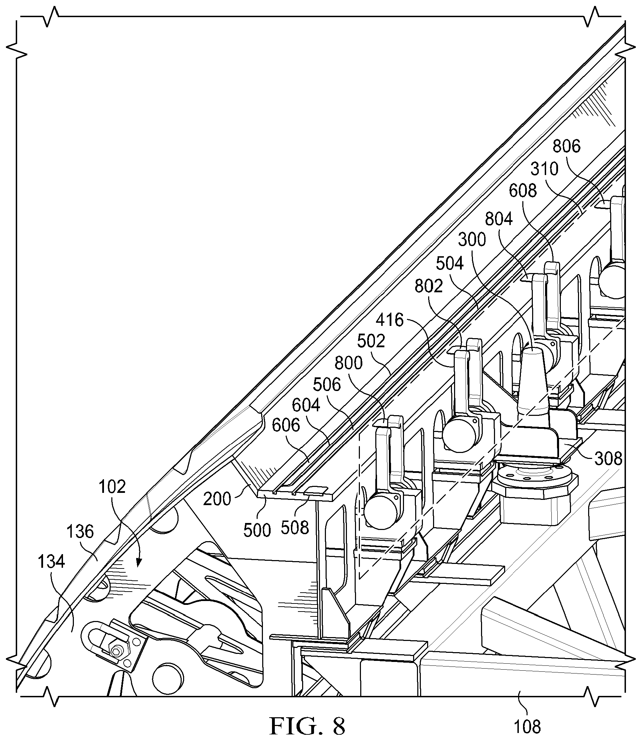

Turning next to **Figure 8****,** an illustration of a perspective view of a portion of a first side segment on a frame is depicted in accordance with an illustrative embodiment. In this perspective view, first side segment **102** has been placed on frame **108** such that socket **308** on first side segment **102** has received alignment pin **300** on frame **108.** In this view, clamp **416** and clamp **608** in clamps **310** are shown relative to alignment pin **300** in clamps **310.**

Further, this perspective view also provides a fuller illustration of first seal structure **200.** In this illustrative example, first seal structure **200** extends along the length, e.g. the entire length, of first side segment **102.**

As depicted, groove **502,** groove **504,** and groove **604** extend along first side segment **102.** Additionally, seal section **506** and seal section **606** are defined by these grooves and also extend alongside first side segment **102** in first seal structure **200.**

Also seen in this perspective view are additional shims that can be seen in addition to shim **508.** As depicted, shim **800,** shim **802,** shim **804,** and shim **806** can be seen in base **500** of first seal structure **200,** disposed, in this illustrative embodiment, in a spaced relationship along the length of first side segment **102.**

Although not shown in these illustrations, second side segment **106** includes features similar to those depicted for first side segment **102.** For example, second side segment **106** includes the same seal structure as first seal structure **200** illustrated in these examples. Further, the same components for connecting first side segment **102,** frame **108,** and center segment **104** are used in second side segment **106.** The arrangement of these components is a mirror image of those for first side segment **102** in this illustrative example.

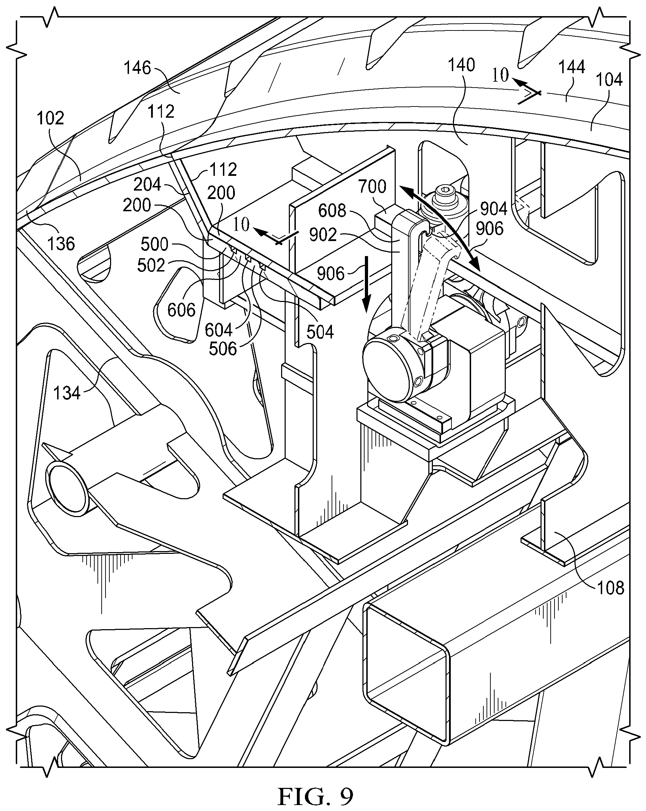

Turning now to **Figure 9****,** an illustration of a perspective view of a clamp is depicted in accordance with an illustrative embodiment. In this illustrative example, a perspective view of a portion of a first side segment and a center segment connected to a frame is depicted in accordance with an illustrative embodiment.

As depicted, clamp **608** has arm **902** that is movable in the direction of arrow **906** to engage engagement structure **700.** In this illustrative example, engagement structure **700** has channel **904.** When arm **902** in clamp **608** is moved to engage channel **904** in engagement structure **700,** arm **902** causes a force in the direction of arrow **906.**

This force can be a compressive force to cause the formation of seal **204** in segment-to-segment joint **112.** In other words, the engagement of arm **900** with channel **904** in engagement structure **700** can cause second seal structure **202** to move in the direction of arrow **906** such that compression of seal section **506** and seal section **606** in base **500** of first seal structure **200** occurs. This compression can result in the formation of seal **204** in this illustrative example.

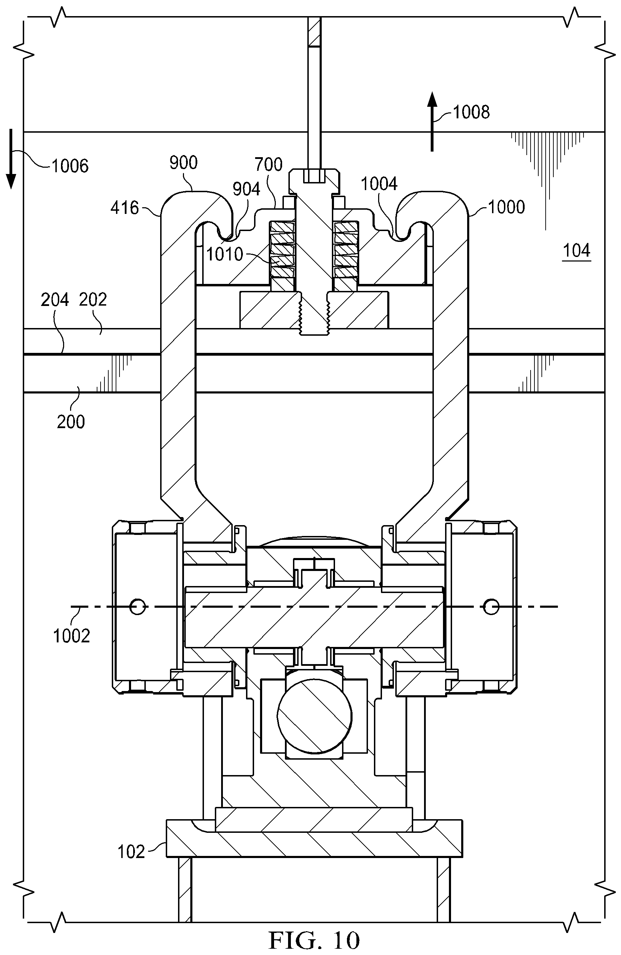

With reference next to **Figure 10****,** an illustration of a cross-sectional view of a clamp and an engagement structure is depicted in accordance with an illustrative embodiment. In this figure, a cross-sectional view of clamp **608** and engagement structure **700** is shown taken along lines 10-10 in **Figure 9****.**

Arm **900** and arm **1000** for clamp **608** can be seen in this cross-sectional view. As depicted, these two arms in clamp **608** are rotatable about axis **1002.** In this illustrative example, arm **900** can be moved independently of arm **1000.** Further in this example, arm **900** is movable to engage channel **904** in engagement structure **700.** In a similar fashion, arm **1000** is movable to engage channel **1004** in engagement structure **700.**

In this illustrative example, engagement of these channels by the arms causes a force in the direction of arrow **1006.** As depicted, engagement structure **700** is biased in the direction of arrow **1008** by biasing structure **1010,** which is a spring in this illustrative example. In other illustrative examples, biasing structure **1010** can be another elastic object that can store mechanical energy.

These components can result in a compressive force. This compressive force can result in seal **204** between first seal structure **200** and second seal structure **202.**

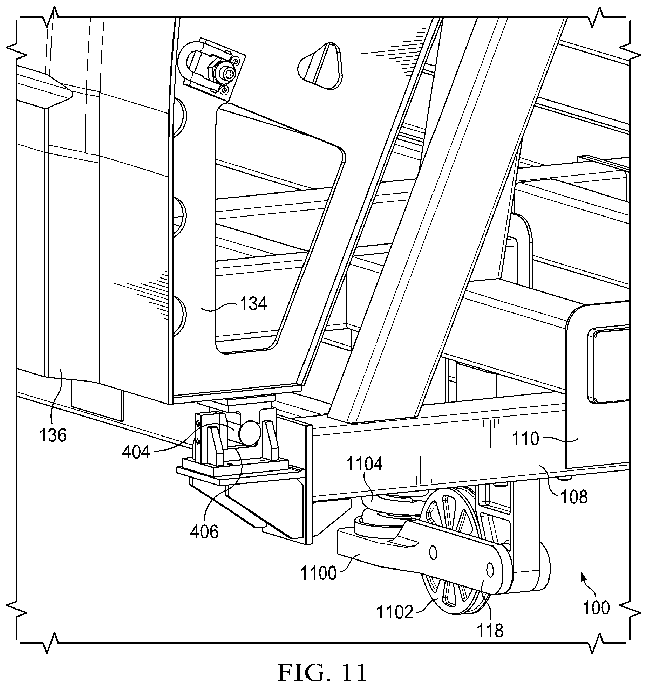

Turning now to **Figure 11****,** an illustration of a perspective view of a connection of a first side segment to a frame is depicted in accordance with an illustrative embodiment. An enlarged view of first side segment **102** connected to frame **108** is illustrated. In this view, rod **404** is shown as being placed in channel **406.**

In this enlarged view, wheel unit **118** comprises arm **1100,** wheel **1102,** and spring **1104.** Arm **1100** is movably attached to frame **108.** Wheel **1102** is rotatably connected to arm **1100.** Spring **1104** is connected to frame **108** and arm **1100.**

As depicted, the configuration of arm **1100** and spring **1104** forms a mechanical dampening system that can absorb and dampen sharp impulses when moving mandrel system **100.** In other illustrative examples, a hydraulic system may be used in addition to or in place of mechanical system for dampening the sharp impulses when moving mandrel system **100.**

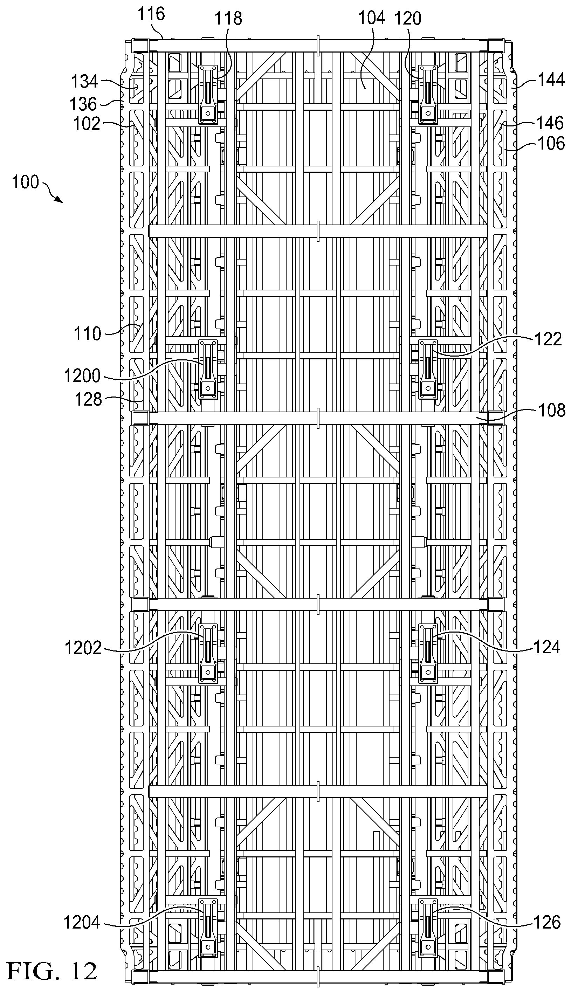

With reference now to **Figure 12****,** an illustration of a bottom view of a management system is depicted in accordance with an illustrative embodiment. In this illustration, bottom side **128** of mandrel system **100** assembled to form segmented mandrel **110** is depicted. In this view of bottom side **128** of segment mandrel **110,** additional wheel units, such as wheel unit **1200,** wheel unit **1202,** and wheel unit **1204,** can be seen.

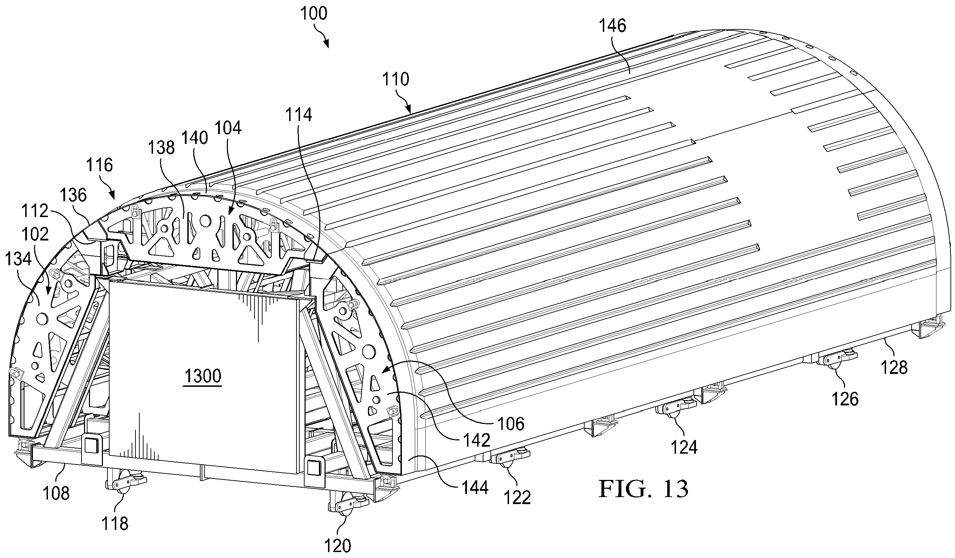

In **Figure 13****,** an illustration of a perspective view of a mandrel system with a blocker is depicted in accordance with an illustrative embodiment. In this illustrative example, end cap **1300** is connected to frame **108** on end **116** of segmented mandrel **110.** End cap **1300** can also be referred to as a blocker. End cap **1300** can be used to guide airflow through the interior of segmented mandrel **110.** End cap **1300** can be shaped to guide the airflow such that desired uniformity in heating is achieved when layers of uncured composite material placed onto inner mold line **146** are cured. In other words, end cap **1300** can be used to guide heated air flowing through the interior of segmented mandrel **110.** In other illustrative examples, end cap **1300** can have other shapes. For example, end cap **1300** can be in the shape of a hemisphere and may include diverters in the form of slots or vents.

The illustrations of mandrel system **100** in **Figures 1-13** are provided to depict one manner in which a mandrel system with segments can be implemented. This illustration is not meant to limit the manner in which other illustrative examples can be implemented. In another list of examples, a mandrel system may have four segments instead of three segments as depicted for mandrel system **100.** In another illustrative example, mandrel system **100** can be for an entire fuselage barrel rather than a fuselage half as depicted. In yet another illustrative example, mandrel system **100** can be for a wing.

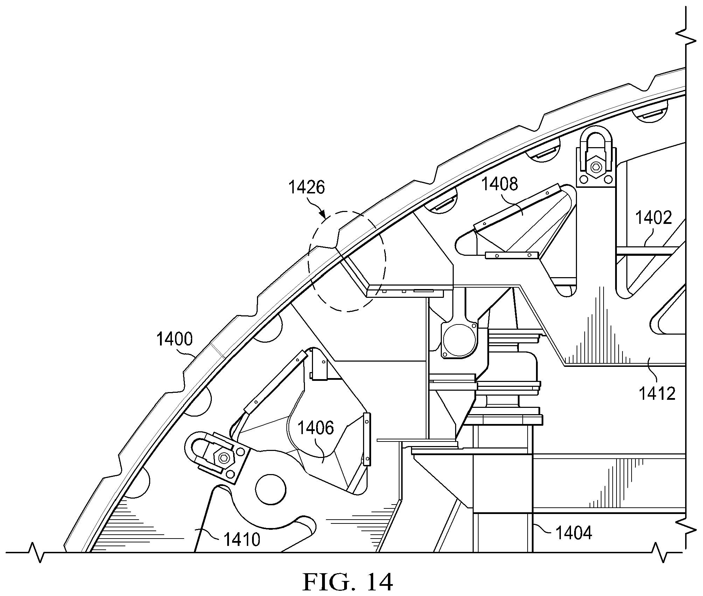

Turning to **Figure 14****,** an illustration of a cross-sectional view of diverters in a first side segment and a center segment connected to a frame is depicted in accordance with an illustrative embodiment. As depicted in this example, first side segment **1400** and center segment **1402** are connected to frame **1404.** This view is similar to **Figure 7****.** However, in this view, diverter **1406** and diverter **1408** are present. Diverter **1406** is located in segment frame **1410** in first side segment **1400.** Diverter **1408** is located in second frame **1412** in center segment **1402.** In this example, diverter **1302** and diverter **1304** are located and positioned to provide a desired airflow through the interior of the segmented mandrel. As depicted, diverter **1406** and diverter **1408** can direct heated air flow to the joint where first side segment **1400** and center segment **1402** connect to each other in section **1426.**

In this illustrative example, the materials in the segments in section **1426** overlap and may have a propensity to heat more slowly as compared to other sections. As depicted, diverter **1406** and diverter **1408** can direct heated airflow to cause a more even heating of the segmented mandrel. In another illustrative example, it may be desirable to repeat placing diverters along the length of the segmented mandrel to repeatedly redirect airflow along the length of the joints in the segmented mandrel.

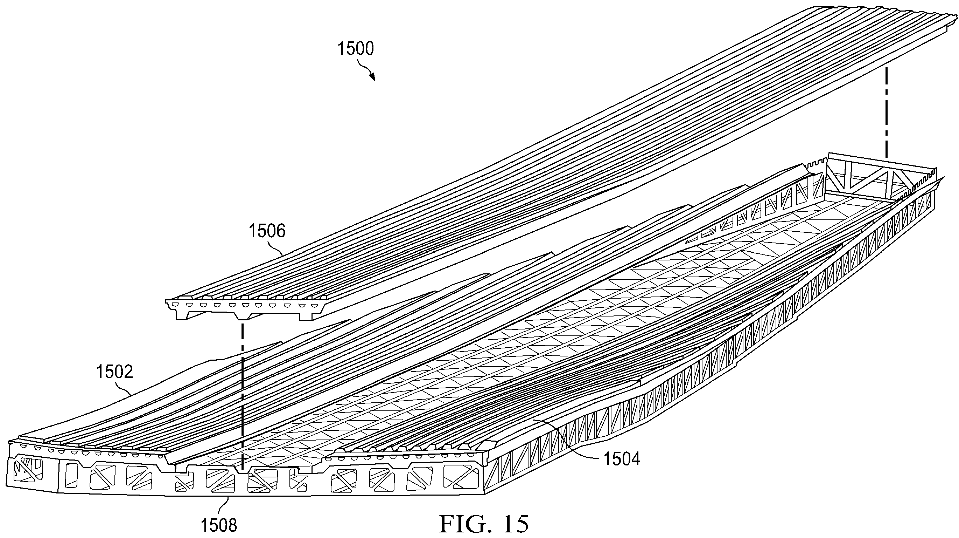

Turning now to **Figure 15****,** an illustration of a perspective view of a partially assembled mandrel system for a wing is depicted in accordance with an illustrative embodiment. In this illustrative example, mandrel system **1500** is configured for use in manufacturing a wing for an aircraft.

In this depicted example, mandrel system **1500** is shown in a perspective view and comprises first side segment **1502,** center segment **1506,** second side segment **1504,** and frame **1508.** In this depicted example, these four components in mandrel system **1500** are shown in a partially assembled form and can be used in manufacturing a portion of wing for an aircraft. These components can be comprised of a metal alloy such as Invar, which is a nickel-iron alloy that is also referred to FeNi36 or 64FeNi.

In the illustrative example, first side segment **1502** and second side segment **1504** are placed on frame **1508.** Thereafter, center segment **1506** is placed on first side segment **1502** and second side segment **1504.** The order in which segments are placed on frame **1508** can change in other examples.

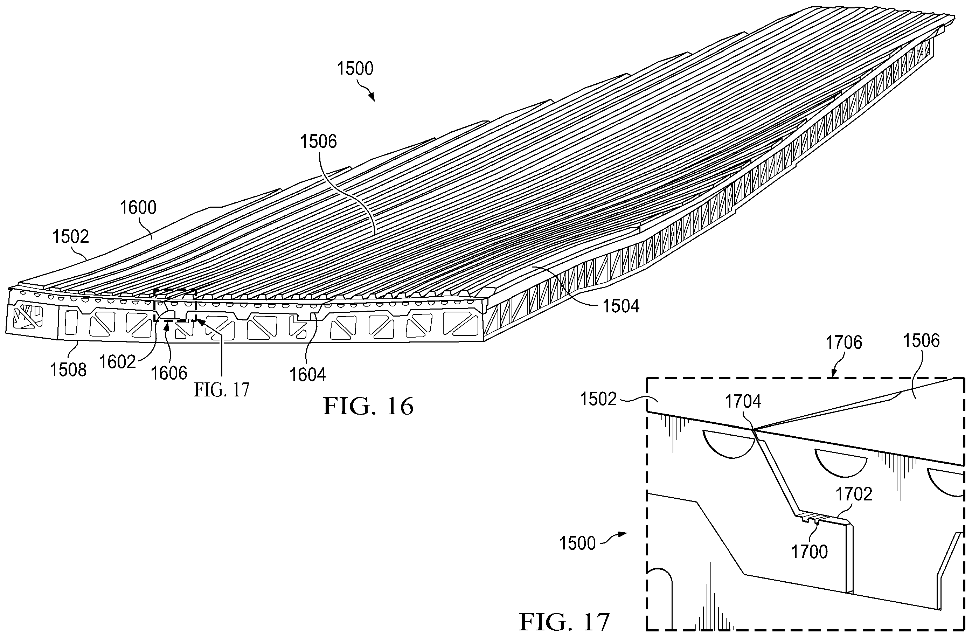

With reference next to **Figure 16****,** an illustration of a perspective view of an assembled mandrel system for a wing is depicted in accordance with an illustrative embodiment. In this view, the different components have been assembled to form segmented mandrel **1600.** In this assembled form, the segments in segmented mandrel **1600** form an inner mold line for laying up composite materials for a wing.

Further, segment-to-segment joint **1602** and segment-to-segment joint **1604** are present. A more detailed view of segment-to-segment joint **1602** in section **1606** is depicted in **Figure 17****.**

Turning to **Figure 17****,** an illustration of an enlarged perspective view of a portion of a segment-to-segment joint in a segmented mandrel is depicted in accordance with an illustrative embodiment.

In this enlarged view, first seal structure **1700** is located on first side segment **1502.** Second seal structure **1702** is located on center segment **1504.** In this example, first seal structure **1700** has a hardness that is less than second seal structure **1702.** In this illustrative example, first seal structure **1700** is comprised of an elastomer or rubber, and second seal structure **1702** is comprised of Invar or some other suitable metal or metal alloy in this example.

As depicted in this view, seal **1704** is present with first seal structure **1700** contacting second seal structure **1702** when first side segment **1502** and center segment **1504** are connected to frame **1508.** This connection is performed in a manner that applies a compressive force to form seal **1704.** In this example, the compressive force is applied by at least one of first seal structure **1700** or second seal structure **1702.**

The illustration of mandrel system **1500** in **Figure 15-17** is provided as an additional example of one manner in which a mandrel system can be implemented. This illustration is not meant to limit the manner in which other mandrel systems can be implemented. For example, other mandrel systems man include other numbers of segments. For example, another mandrel system may include four segments or five segments instead of three segments as depicted in these figures. In yet another illustrative example, a mandrel system can be implemented for other structures other than a wing. For example, a mandrel system can be configured for laying up composite materials for a stabilizer, an engine housing, or some other suitable component for an aircraft or other type of product.

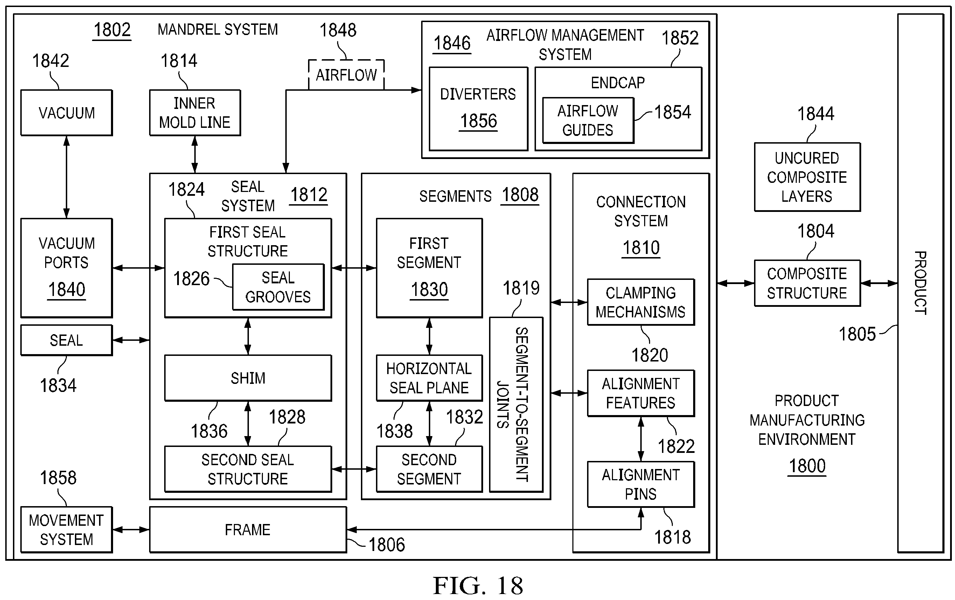

With reference now to **Figure 18****,** an illustration of a product manufacturing environment is depicted in accordance with an illustrative embodiment. In this illustrative example, product manufacturing environment **1800** is an environment in which mandrel system **1802** can be used to manufacture composite structure **1804** for product **1805.** In this illustrative example, mandrel system **100** in **Figure 1** and mandrel system **1500** in **Figure 15** are examples of physical implementations of mandrel system **1802** shown in block form.

In this illustrative example, product **1805** can take a number of different forms. For example, product **1805** can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, a surface ship, a tank, a personnel carrier, a train, a spacecraft, a space station, a satellite, a missile, a submarine, an automobile, a power plant, a bridge, a dam, a house, a manufacturing facility, a building, or some other suitable type of product. Composite structure **1804** can take a number of different forms depending on the type of product. For example, composite structure **1804** can be selected from a group comprising a fuselage, a fuselage section, a fuselage half, a fuel tank, a missile body, a rocket booster, a wing, and other suitable composite structures.

In this illustrative example, mandrel system **1802** comprises a number of different components. As depicted, mandrel system **1802** includes frame **1806,** segments **1808,** connection system **1810,** and seal system **1812.**

In this illustrative example, frame **1806** is a physical structure that can be used to support other components in mandrel system **1802.** For example, segments **1808** can be connected to frame **1806.** When connected to frame **1806,** segments **1808** provide inner mold line **1814** for manufacturing composite structure **1804.**

As depicted, connection system **1810** connects segments **1808** to frame **1806.** In one illustrative example, connection system **1810** comprises alignment pins **1818,** clamping mechanisms **1820,** and alignment features **1822.**

In the illustrative example, alignment pins **1818** are connected to frame **1806.** Alignment pins **1818** can engage alignment features **1822** in segments **1808.** Alignment features **1822** can be, for example, sockets that can be configured to receive alignment pins **1818** such that engagement of alignment pins **1818** in the sockets occurs. Alignment features **1822** can take other forms such as, for example, a slot, a channel, or other features that can engage an alignment pin. When alignment pins **1818** engage alignment features **1822,** segments **1808** are aligned in desired positions relative to each other on frame **1806.**

As depicted, clamping mechanisms **1820** are connected to segments **1808.** Clamping mechanisms **1820** are operable to secure segments **1808** to frame **1806** when segments **1808** are aligned on frame **1806.** For example, clamps on first segment **1830** clamps second segment **1832** that has an alignment feature engaged with an alignment pin on frame **1806.** This clamping secures these segments to frame **1806** in addition to securing these segments to each other.

Seal system **1812** can seal segment-to-segment joints **1819** in locations where segments **1808** are joined to each other. In this illustrative example, seal system **1812** comprises first seal structure **1824,** a set of seal grooves **1826,** and second seal structure **1828.**

As depicted, first seal structure **1824** can be located on first segment **1830** in segments **1808.** In the illustrative example, first seal structure **1824** can be selected from at least one of an elastomer, a polymer, rubber, silicon, or some other suitable material. In this depicted example, the set of seal grooves **1826** is located in first seal structure **1824.**

Second seal structure **1828** is located on second segment **1832** in segments **1808** in seal system **1812** that contacts first seal structure **1824** to form seal **1834** when first segment **1830** and second segment **1832** are connected to frame **1806.** In this illustrative example, second seal structure **1828** is selected from at least one of a metal, an alloy, a nickel iron alloy, FeNi36, a carbon fiber, an elastomer, a polymer, rubber, silicon, or some other suitable material.

Seal **1834** can be formed at or near one of segment-to-segment joints **1819.** First seal structure **1824** and second seal structure **1828** form horizontal seal plane **1838** between first segment **1830** and second segment **1832** in segments **1808.**

Further, seal system **1812** can also include shim **1836** in at least one of first seal structure **1824** or second seal structure **1828.** When shim **1836** is located in first seal structure **1824,** shim **1836** has a hardness level that is greater than the hardness of second seal structure **1828.** In this illustrative example, shim **1836** can extend above a plane for a seal structure in which shim **1836** is located and configured to maintain a desired gap between a groove in second seal structure **1828** and first seal structure **1824.**

In the illustrative example, the set of seal grooves **1826** is in communication with a set of vacuum ports **1840.** Vacuum **1842** can be drawn through the set of seal grooves **1826** using the set of vacuum ports **1840** during curing of uncured composite layers **1844** for composite structure **1804.** In this example, uncured composite layers **1844** are laid up on mandrel system **1802** with segments **1808** connected to frame **1806.**

Mandrel system **1802** can also include airflow management system **1846.** As depicted, airflow management system **1846** guides airflow **1848** to a set of areas within inner mold line **1814** such that at least one of uniform heating, a desired heating profile, or increased heating speed occurs when curing uncured composite layers **1844** for composite structure **1804** laid up on inner mold line **1814** formed by segments **1808.** In other words, airflow management system **1846** can guide airflow **1848** to areas inside of mandrel system **1802** when segments **1808** are connected to frame **1806** to inner mold line **1814.**

The guidance of airflow **1848** can be performed to obtain desired heating profiles in mandrel system **1802.** These desired heating profiles can provide a desired heating for different areas on inner mold line **1814.**

As depicted, airflow management system **1846** can comprise at least one of endcap **1852** with airflow guides **1854** or diverters **1856.** In this illustrative example, airflow management system **1846** directs airflow **1848** to locations where segments **1808** are joined to each other such as segment-to-segment joints **1819.**

Additionally, mandrel system **1802** can also include movement system **1858.** In this illustrative example, movement system **1858** is connected to frame **1806.** Movement system **1858** can operate to move frame **1806** with segments **1808** connected to frame **1806.** Movement system **1858** can comprise at least one of a wheel, a rail wheel, an omni wheel, a pedrail wheel, a continuous track, or some other locomotion component.

Movement system **1858** moves frame **1806** with segments **1808** connected to frame **1806** along at least one of a moving line production system, a pulsed line production system, or some other line or path in product manufacturing environment **1800.**

In this manner, mandrel system **1802** can be mobile and move during fabrication of composite structure **1804.** For example, mandrel system **1802** can be moved for different phases of fabrication during at least one of assembly of mandrel system **1802,** preparation, cleaning, application of release layers, laying up uncured composite layers, curing the uncured composite layers, disassembly of mandrel system **1802,** or other phases or operations to manufacture composite structure **1804.**

In one illustrative example, one or more technical solutions are present that overcome a technical problem with manufacturing composite structures. As a result, the illustrative examples provide one or more technical solutions that can provide a technical effect of reducing the time and effort needed to assemble and disassemble mandrels for manufacturing composite structures.

Further, the illustrative examples provide one or more technical solutions that reduce inconsistencies or markings at segment-to-segment joints. For example, the illustrative examples provide an ability to more precisely align segments with a connection system in which the segments can be connected to a frame. These segments are indexed to the frame. In other words, in the illustrative example, features in a connection system are present that enable aligning these segments in a desired position with respect to each other. This increased precision enables reducing inconsistencies or markings at the segment-to-segment joints.

Still further, one or more illustrative examples can reduce inconsistencies through an ability to direct airflow using an airflow management system to obtain a desired heating profile for uncured composite layers placed on an inner mold line of a mandrel system configured in accordance with an illustrative example. With one or more of these and other features in the depicted examples, the quality of composite parts can be increased by fabricating the composite parts using mandrel system **1802.**

The illustration of product manufacturing environment **1800** in **Figure 18** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, product manufacturing environment **1800** can include one or more mandrel systems in addition to or in place of mandrel system **1802.** These mandrel systems may have components similar in configuration to mandrel system **1802.** At least one of the shape, dimensions, or number of segments **1808** in a mandrel system can vary depending on composite structure **1804.** The additional mandrel systems may be configured such that multiple composite structures of the same type can be fabricated at substantially the same time.

In other examples, the additional mandrel systems can be configured such that different types of composite structures can be manufactured at substantially the same time. Additionally, other components such as a curing system, an enclave, an automatic fiber placement tool, or other components can also be present although not shown in product manufacturing environment **1800** in **Figure 18****.**

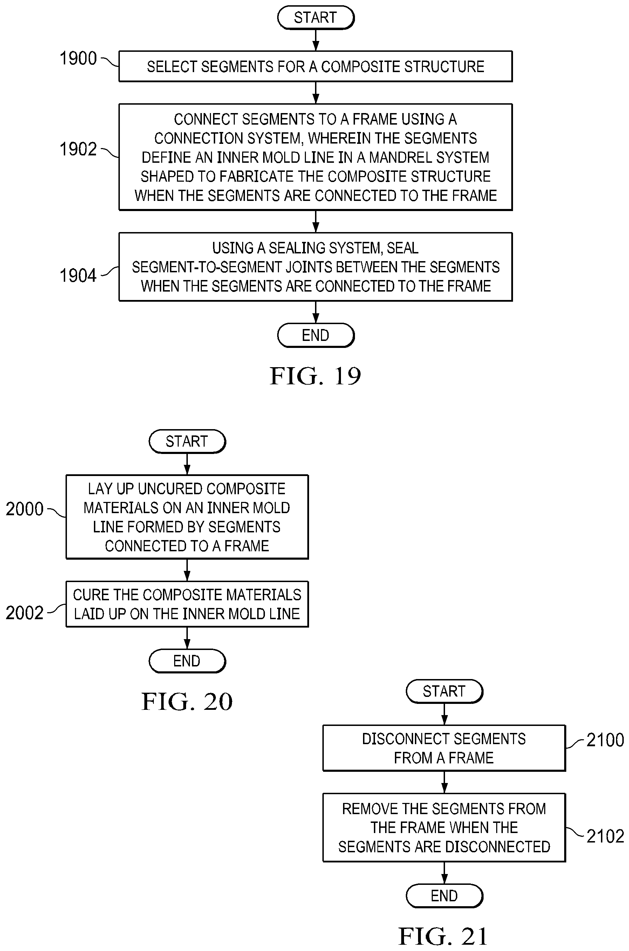

Turning next to **Figure 19****,** an illustration of a flowchart of a process for forming a composite structure is depicted in accordance with an illustrative embodiment. The process in **Figure 19** can be implemented using physical components such as mandrel system **100** as depicted in **Figures 1-13** and mandrel system **1802** shown in block form in **Figure 18****.**

The process begins by selecting segments for a composite structure (operation **1900**)**.** The process connects segments to a frame using a connection system, wherein the segments define an inner mold line in a mandrel system shaped to fabricate the composite structure when the segments are connected to the frame (operation **1902**). In operation **1902,** the inner mold line can be formed when alignment pins on the frame are engaged with alignment features. The segments can be aligned and connected on the frame such that the segments define the inner mold line in the mandrel system with a shape for fabricating the composite structure.

The process, using a sealing system, seals segment-to-segment joints between the segments when the segments are connected to the frame (operation **1904**). The process terminates thereafter.

Turning next to **Figure 20****,** another illustration of a flowchart of a process for forming a composite structure is depicted in accordance with an illustrative embodiment. The process in **Figure 20** depicts additional operations that can be performed for the process illustrated in **Figure 19****.** These operations can be performed after operation **1904** in **Figure 19****.**

The process begins by laying up uncured composite materials on an inner mold line formed by segments connected to a frame (operation **2000**). The process cures the composite materials laid up on the inner mold line (operation **2002**). The process terminates thereafter.

Turning next to **Figure 21****,** yet another illustration of a flowchart of a process for forming a composite structure is depicted in accordance with an illustrative embodiment. The process in **Figure 21** depicts additional operations that can be performed after the operation illustrated in **Figure 20****.** These operations can be performed after operation **2002** in **Figure 20****.**

The process begins by disconnecting segments from a frame (operation **2100**). The process removes the segments from the frame when the segments are disconnected (operation **2102**). The process terminates thereafter.

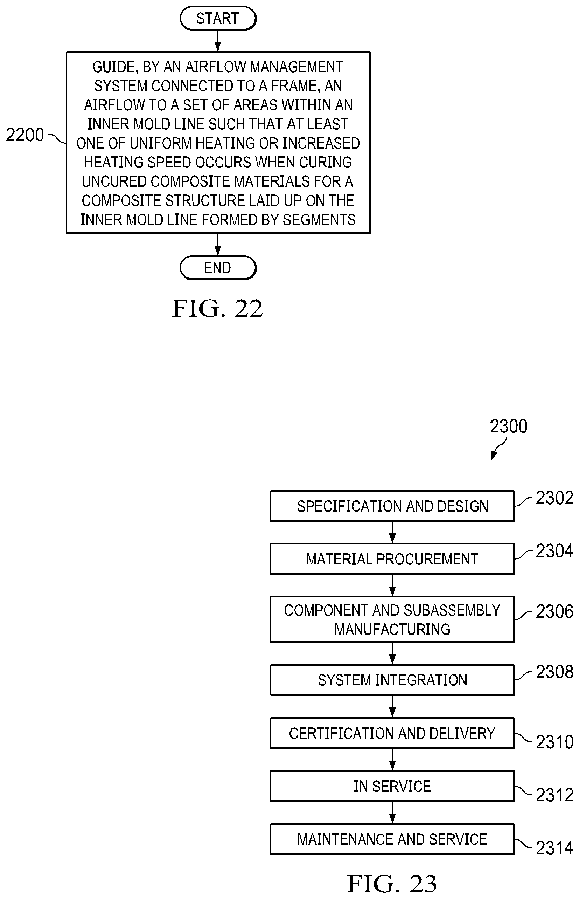

Turning next to **Figure 22****,** still another illustration of a flowchart of a process for forming a composite structure is depicted in accordance with an illustrative embodiment. The process in **Figure 22** depicts additional operations that can be performed during operation **2002** illustrated in **Figure 20****.**

The process guides, by an airflow management system connected to a frame, an airflow to a set of areas within an inner mold line such that at least one of uniform heating or increased heating speed occurs when curing uncured composite materials for a composite structure laid up on the inner mold line formed by segments (operation **2200**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. Each block in the flowcharts or the block diagrams can be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

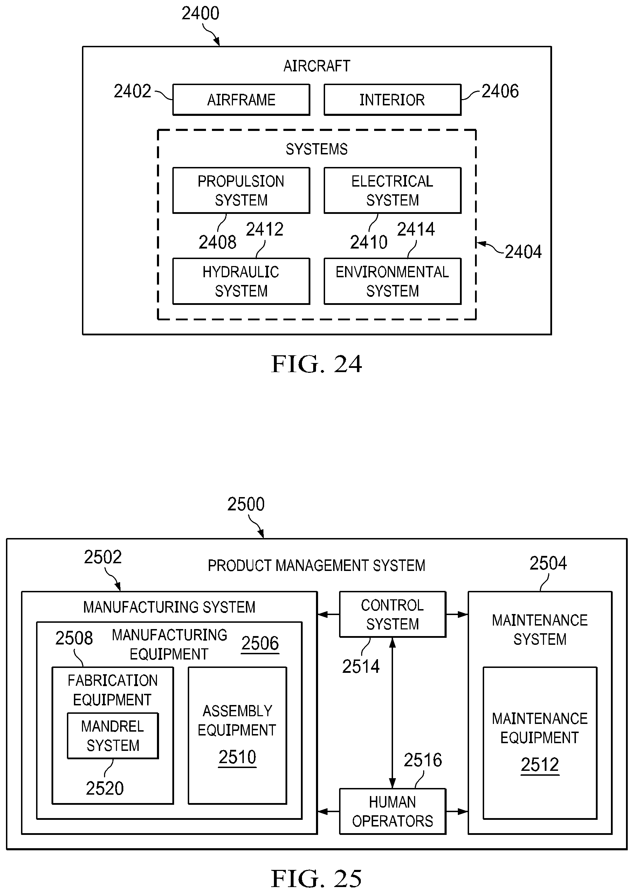

Illustrative embodiments of the disclosure may be described in the context of aircraft manufacturing and service method **2300** as shown in **Figure 23** and aircraft **2400** as shown in **Figure 24****.** Turning first to **Figure 23****,** an illustration of an aircraft manufacturing and service method is depicted in accordance with an illustrative embodiment. During pre-production, aircraft manufacturing and service method **2300** may include specification and design **2302** of aircraft **2400** in **Figure 24** and material procurement **2304.**

During production, component and subassembly manufacturing **2306** and system integration **2308** of aircraft **2400** in **Figure 24** takes place. Thereafter, aircraft **2400** in **Figure 24** can go through certification and delivery **2310** in order to be placed in service **2312.** While in service **2312** by a customer, aircraft **2400** in **Figure 24** is scheduled for routine maintenance and service **2314,** which may include modification, reconfiguration, refurbishment, and other maintenance or service.

Each of the processes of aircraft manufacturing and service method **2300** may be performed or carried out by a system integrator, a third party, an operator, or some combination thereof. In these examples, the operator may be a customer.

For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 24****,** an illustration of an aircraft is depicted in which an illustrative embodiment may be implemented. In this example, aircraft **2400** is produced by aircraft manufacturing and service method **2300** in **Figure 23** and may include airframe **2402** with plurality of systems **2404** and interior **2406.** Examples of systems **2404** include one or more of propulsion system **2408,** electrical system **2410,** hydraulic system **2412,** and environmental system **2414.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **2300** in **Figure 23****.**

In one illustrative example, components or subassemblies produced in component and subassembly manufacturing **2306** in **Figure 23** can be fabricated or manufactured in a manner similar to components or subassemblies produced while aircraft **2400** is in service **2312** in **Figure 23****.** As yet another example, one or more apparatus embodiments, method embodiments, or a combination thereof can be utilized during production stages, such as component and subassembly manufacturing **2306** and system integration **2308** in **Figure 23****.** One or more apparatus embodiments, method embodiments, or a combination thereof may be utilized while aircraft **2400** is in service **2312,** during maintenance and service **2314** in **Figure 23****,** or both. The use of a number of the different illustrative embodiments may substantially expedite the assembly of aircraft **2400,** reduce the cost of aircraft **2400,** or both expedite the assembly of aircraft **2400** and reduce the cost of aircraft **2400.**

For example, at least one of mandrel system **100** in **Figure 1** or mandrel system **1802** in **Figure 18** can be used during component and subassembly manufacturing **2306** to fabricate composite structures for use manufacturing aircraft **2400.** Additionally, these mandrel systems can also be used during other parts of aircraft manufacturing and service method **2300.** For example, composite structures can be fabricated using one of these mandrels systems during maintenance and service **2314** for use in replacing parts. Further, the composite structures can also be used when performing at least one of modification, reconfiguration, refurbishment, or other maintenance or service during maintenance and service **2314.**

Turning now to **Figure 25****,** an illustration of a block diagram of a product management system is depicted in accordance with an illustrative embodiment. Product management system **2500** is a physical hardware system. In this illustrative example, product management system **2500** includes at least one of manufacturing system **2502** or maintenance system **2504.**

Manufacturing system **2502** is configured to manufacture products, such as aircraft **2400** in **Figure 24****.** As depicted, manufacturing system **2502** includes manufacturing equipment **2506.** Manufacturing equipment **2506** includes at least one of fabrication equipment **2508** or assembly equipment **2510.**

Fabrication equipment **2508** is equipment that used to fabricate components for parts used to form aircraft **2400** in **Figure 24****.** For example, fabrication equipment **2508** can include machines and tools. These machines and tools can be at least one of a drill, a hydraulic press, a furnace, a mold, a composite tape laying machine, a vacuum system, a lathe, or other suitable types of equipment. As depicted, fabrication equipment **2508** can also include mandrel system **2520.** Mandrel system **2520** can be implemented using, for example, mandrel system **100** in **Figure 1****,** mandrel system **1500** in **Figure 15****,** or mandrel system **1802** in **Figure 18****.** Fabrication equipment **2508** can be used to fabricate at least one of metal parts, composite parts, semiconductors, circuits, fasteners, ribs, skin panels, spars, antennas, or other suitable types of parts.

Assembly equipment **2510** is equipment used to assemble parts to form aircraft **2400** in **Figure 24****.** In particular, assembly equipment **2510** is used to assemble components and parts to form aircraft **2400** in **Figure 24****.** Assembly equipment **2510** also can include machines and tools. These machines and tools may be at least one of a robotic arm, a crawler, a fastener installation system, a rail-based drilling system, or a robot. Assembly equipment **2510** can be used to assemble parts such as seats, horizontal stabilizers, wings, engines, engine housings, landing gear systems, and other parts for aircraft **2400** in **Figure 24****.**

In this illustrative example, maintenance system **2504** includes maintenance equipment **2512.** Maintenance equipment **2512** can include any equipment needed to perform maintenance on aircraft **2400** in **Figure 24****.** Maintenance equipment **2512** may include tools for performing different operations on parts on aircraft **2400** in **Figure 24****.** These operations can include at least one of disassembling parts, refurbishing parts, inspecting parts, reworking parts, manufacturing replacement parts, or other operations for performing maintenance on aircraft **2400** in **Figure 24****.** These operations can be for routine maintenance, inspections, upgrades, refurbishment, or other types of maintenance operations.

In the illustrative example, maintenance equipment **2512** may include ultrasonic inspection devices, x-ray imaging systems, vision systems, drills, crawlers, and other suitable devices. In some cases, maintenance equipment **2512** can include fabrication equipment **2508,** assembly equipment **2510,** or both to produce and assemble parts that needed for maintenance.

Product management system **2500** also includes control system **2514.** Control system **2514** is a hardware system and may also include software or other types of components. Control system **2514** is configured to control the operation of at least one of manufacturing system **2502** or maintenance system **2504.** In particular, control system **2514** can control the operation of at least one of fabrication equipment **2508,** assembly equipment **2510,** or maintenance equipment **2512.**

The hardware in control system **2514** can be implemented using hardware that may include computers, circuits, networks, and other types of equipment. The control may take the form of direct control of manufacturing equipment **2506.** For example, robots, computer-controlled machines, and other equipment can be controlled by control system **2514.** In other illustrative examples, control system **2514** can manage operations performed by human operators **2516** in manufacturing or performing maintenance on aircraft **2400.** For example, control system **2514** can assign tasks, provide instructions, display models, or perform other operations to manage operations performed by human operators **2516.**

In the different illustrative examples, human operators **2516** can operate or interact with at least one of manufacturing equipment **2506,** maintenance equipment **2512,** or control system **2514.** This interaction can occur to manufacture aircraft **2400** in **Figure 24****.**

Of course, product management system **2500** may be configured to manage other products other than aircraft **2400** in **Figure 24****.** Although product management system **2500** has been described with respect to manufacturing in the aerospace industry, product management system **2500** can be configured to manage products for other industries. For example, product management system **2500** can be configured to manufacture products for the automotive industry as well as any other suitable industries.

Thus, the illustrative embodiments provide a method, an apparatus, and a system for forming a composite structure. A mandrel system comprises a frame, segments, a connection system, and a seal system. The segments are connected to the frame. The segments provide an inner mold line for a composite structure. The connection system connects the segments to the frame. The seal system seals segment-to-segment joints in locations where the segments are joined to each other. The inner mold line of the mandrel system can be used to layup and cure composite layers for a composite structure.

With the mandrel system in the different illustrative examples, the assembly of components to form a mandrel is easier and requires less time as compared to current systems. Further, at least one of the sealing system or the connection system enables reducing at least one of inconsistencies or markings at the segment-to-segment joints in a segmented mandrel formed from connecting the segments to each other.

## Claims

1. A mandrel system (100, 1500, 1802) comprising:
a frame (108, 1508, 1806);
segments (102, 104, 106, 1502, 1504, 1506, 1808) connected to the frame (108, 1508, 1806), wherein the segments (102, 104, 106, 1502, 1504, 1506, 1808) provide an inner mold line (146, 1814) for a composite structure (1804);
a connection system (1810) that connects the segments (102, 104, 106, 1502, 1504, 1506, 1808) to the frame (108, 1508, 1806); and
a seal system (1812) that seals segment-to-segment joints (112, 114, 1602, 1604, 1819) in locations where the segments (102, 104, 106, 1502, 1504, 1506, 1808) are joined to each other,
wherein the seal system (1812) comprises:
a first seal structure (200, 1700, 1824) on a first segment (1830) in the segments (102, 104, 106, 1502, 1504, 1506, 1808);
a set of seal grooves (1826) in the first seal structure (200, 1700, 1824);
a second seal structure (202, 1602, 1828) on a second segment (1832) in the segments (102, 104, 106, 1502, 1504, 1506, 1808) in the seal system (1812) that contacts the first seal structure (200, 1700, 1824) to form a seal (204, 1704, 1834) when the first segment (1830) and the second segment (1832) are connected to the frame (108, 1508, 1806) and
a shim (508, 800, 802, 804, 806, 1836) in at least one of the first seal structure (200, 1700, 1824) or the second seal structure (202, 1702, 1828).

2. The mandrel system (100, 1500, 1802) of claim 1, further comprising:
an airflow management system (1846) connected to the frame (108, 1508, 1806), wherein the airflow management system (1846) is configured to guide an airflow (1848) to a set of areas within the inner mold line (146, 1814) such that at least one of uniform heating or increased heating speed occurs when curing uncured composite materials for the composite structure (1804) laid up on the inner mold line (146, 1814) formed by the segments (102, 104, 106, 1502, 1504, 1506, 1808).

3. The mandrel system (100, 1500, 1802) of claim 1 or 2, further comprising:
a movement system (1858) connected to the frame (108, 1508, 1806), wherein the movement system (1858) operates to move the frame (108, 1508, 1806) with the segments (102, 104, 106, 1502, 1504, 1506, 1808) connected to the frame (108, 1508, 1806).

4. The mandrel system (100, 1500, 1802) of any one of claims 1-3, wherein the shim (508, 800, 802, 804, 806, 1836) is comprised in the first seal structure (200, 1700, 1824), wherein the shim (508, 800, 802, 804, 806, 1836) has a hardness level greater than the second seal structure (202, 1702, 1828).

5. The mandrel system (100, 1500, 1820) of claim 4, wherein the shim (508, 800, 802, 804, 806, 1836) extends above a plane for the first seal structure and is configured to maintain a desired gap between a groove (502, 504, 604) in the first seal structure (200, 1700, 1824) and the second seal structure (202, 1702, 1828).

6. The mandrel system (100, 1500, 1802) of any one of claims 1-5, wherein the first seal structure (200, 1700, 1824) and the second seal structure (202, 1702, 1828) form a horizontal seal plane (710, 1838) between the first segment (1830) and the second segment (1832).

7. The mandrel system (100, 1500, 1802) of any of claims 1-6, wherein the connection system (1810) comprises:
alignment pins (300, 302, 304, 306, 1818) connected to the frame (108, 1508, 1806), wherein the alignment pins (300, 302, 304, 306, 1818) engage alignment features (1822) in the segments (102, 104, 106, 1502, 1504, 1506, 1808).

8. The mandrel system (100, 1500, 1802) of any of claims 1-7, wherein the connection system (1810) comprises:
clamping mechanisms (1820) connected to the segments (102, 104, 106, 1502, 1504, 1506, 1808), wherein the clamping mechanisms (1820) are operable to secure the segments (102, 104, 106, 1502, 1504, 1506, 1808) to the frame (108, 1508, 1806) when the segments (102, 104, 106, 1502, 1504, 1506, 1808) are aligned on the frame (108, 1508, 1806).

9. A method for forming a composite structure (1804), the method comprising:
selecting (1900) segments (102, 104, 106, 1502, 1504, 1506, 1808) for the composite structure (1804);
connecting (1902), using a connection system (1710), segments (102, 104, 106, 1502, 1504, 1506, 1808) to a frame (108, 1508, 1806), wherein the segments (102, 104, 106, 1502, 1504, 1506, 1808) define an inner mold line (146, 1814) in a mandrel system (100, 1500, 1802) shaped to fabricate the composite structure (1804) when the segments (102, 104, 106, 1502, 1504, 1506, 1808) are connected to the frame (108, 1508, 1806); and
sealing (1904), using a seal system (1812), segment-to-segment joints (112, 114, 1602, 1604, 1819) between the segments (102, 104, 106, 1502, 1504, 1506, 1808) when the segments (102, 104, 106, 1502, 1504, 1506, 1808) are connected to the frame (108, 1508, 1806),
wherein the seal system (1812) comprises:
a first seal structure (200, 1700, 1824) on a first segment (1830) in the segments (102, 104, 106, 1502, 1504, 1506, 1808);
a set of seal grooves (1826) in the first seal structure (200, 1700, 1824); and
a second seal structure (202, 1702, 1828) on a second segment (1832) in the segments (102, 104, 106, 1502, 1504, 1506, 1808) in the seal system (1812) that contacts the first seal structure (200, 1700, 1824) to form a seal (204, 1704, 1834) when the first segment (1830) and the second segment (1832) are connected to the frame (108, 1508, 1806) and
a shim (508, 800, 802, 804, 806, 1836) in at least one of the first seal structure (200, 1700, 1824) or the second seal structure (202, 1702, 1828).

10. The method of claim 9, further comprising:
laying up (2000) uncured composite materials on the inner mold line (146, 1814) formed by the segments (102, 104, 106, 1502, 1504, 1506, 1808) connected to the frame (108, 1508, 1806); and
curing (2002) the uncured composite materials laid up on the inner mold line (146, 1814).

11. The method of claim 9 or 10, further comprising:
disconnecting (2100) the segments (102, 104, 106, 1502, 1504, 1506, 1808) from the frame (108, 1408, 1806); and
removing (2102) the segments (102, 104, 106, 1502, 1504, 1506, 1808) from the frame (108, 1508, 1806) when the segments (102, 104, 106, 1502, 1504, 1506, 1808) are disconnected.

12. The method of any of claims 9-11, further comprising:
guiding (2200), by an airflow management system (1846) connected to the frame (108, 1508, 1806), an airflow (1848) to a set of areas within the inner mold line (146, 1814) such that at least one of uniform heating or increased heating speed occurs when curing uncured composite materials for the composite structure (1704) laid up on the inner mold line (146, 1814) formed by the segments (102, 104, 106, 1502, 1504, 1506, 1808).

13. The method of any of claims 9-12, further comprising:
moving, by a movement system (1858), the frame (108, 1508, 1806) with the segments (102, 104, 106, 1502, 1504, 1506, 1808) connected to the frame (108, 1508, 1806).

14. The method of any of claims 9-13, wherein the connecting step comprises:
engaging alignment pins (300, 302, 304, 306, 1818) with alignment features (1822), wherein the segments (102, 104, 106, 1502, 1504, 1506, 1808) are aligned on the frame (108, 1508, 1806) when connecting, by the connection system (1810), the segments (102, 104, 106, 1502, 1504, 1506, 1808) to the frame (108, 1508, 1806) such that segments (102, 104, 106, 1502, 1504, 1506, 1808) define the inner mold line (146, 1814) in the mandrel system (100, 1500, 1802) shaped to fabricate the composite structure (1804) when the segments (102, 104, 106, 1502, 1504, 1506, 1808) are connected to the frame (108, 1508, 1806).

15. The method of any of claims 9-14, wherein the connecting step comprises:
securing, by clamping mechanisms (1820) connected to the segments (102, 104, 106, 1502, 1504, 1506, 1808) to the frame (108, 1508, 1806), the segments (102, 104, 106, 1502, 1504, 1506, 1808) to the frame (108, 1508, 1806) when the segments (102, 104, 106, 1502, 1504, 1506, 1808) are aligned on the frame (108, 1508, 1806).

## Patentansprüche

1. Dornsystem (100, 1500, 1802), umfassend:
einen Rahmen (108, 1508, 1806);
Segmente (102, 104, 106, 1502, 1504, 1506, 1808), die mit dem Rahmen (108, 1508, 1806) verbunden sind, wobei die Segmente (102, 104, 106, 1502, 1504, 1506, 1808) eine innere Formlinie (146, 1814) für eine Verbundwerkstoffstruktur (1804) bereitstellen;
ein Verbindungssystem (1810), das die Segmente (102, 104, 106, 1502, 1504, 1506, 1808) mit dem Rahmen (108, 1508, 1806) verbindet; und
ein Dichtungssystem (1812), das Segment-an-Segment-Verbindungsstellen (112, 114, 1602, 1604, 1819) an Stellen abdichtet, an denen die Segmente (102, 104, 106, 1502, 1504, 1506, 1808) aneinander angefügt sind,
wobei das Dichtungssystem (1812) Folgendes umfasst:
eine erste Dichtungsstruktur (200, 1700, 1824) auf einem ersten Segment (1830) in den Segmenten (102, 104, 106, 1502, 1504, 1506, 1808);
einen Satz von Dichtungsnuten (1826) in der ersten Dichtungsstruktur (200, 1700, 1824);
eine zweite Dichtungsstruktur (202, 1602, 1828) auf einem zweiten Segment (1832) in den Segmenten (102, 104, 106, 1502, 1504, 1506, 1808) im Dichtungssystem (1812), die die erste Dichtungsstruktur (200, 1700, 1824) kontaktiert, um eine Dichtung (204, 1704, 1834) zu bilden, wenn das erste Segment (1830) und das zweite Segment (1832) mit dem Rahmen (108, 1508, 1806) verbunden sind, und
eine Distanzscheibe (508, 800, 802, 804, 806, 1836) in mindestens einer von der ersten Dichtungsstruktur (200, 1700, 1824) oder der zweiten Dichtungsstruktur (202, 1702, 1828).

2. Dornsystem (100, 1500, 1802) nach Anspruch 1, weiter umfassend:
ein Luftstromverwaltungssystem (1846), das mit dem Rahmen (108, 1508, 1806) verbunden ist, wobei das Luftstromverwaltungssystem (1846) ausgebildet ist, um einen Luftstrom (1848) zu einem Satz von Bereichen innerhalb der inneren Formlinie (146, 1814) zu führen, sodass mindestens eines von gleichförmiger Erhitzung oder erhöhter Heizgeschwindigkeit beim Aushärten von nicht ausgehärteten Verbundwerkstoffmaterialien für die Verbundwerkstoffstruktur (1804), die auf der von den Segmenten (102, 104, 106, 1502, 1504, 1506, 1808) gebildeten inneren Formlinie (146, 1814) aufgetragen sind, erfolgt.

3. Dornsystem (100, 1500, 1802) nach Anspruch 1 oder 2, weiter umfassend:
ein Bewegungssystem (1858), das mit dem Rahmen (108, 1508, 1806) verbunden ist, wobei das Bewegungssystem (1858) arbeitet, um den Rahmen (108, 1508, 1806) mit den Segmenten (102, 104, 106, 1502, 1504, 1506, 1808) mit dem Rahmen (108, 1508, 1806) verbunden zu bewegen.

4. Dornsystem (100, 1500, 1802) nach einem der Ansprüche 1-3, wobei die Distanzscheibe (508, 800, 802, 804, 806, 1836) in der ersten Dichtungsstruktur (200, 1700, 1824) enthalten ist, wobei die Distanzscheibe (508, 800, 802, 804, 806, 1836) eine Härtestufe aufweist, die größer ist als die zweite Dichtungsstruktur (202, 1702, 1828).

5. Dornsystem (100, 1500, 1820) nach Anspruch 4, wobei sich die Distanzscheibe (508, 800, 802, 804, 806, 1836) oberhalb einer Ebene für die erste Dichtungsstruktur erstreckt und ausgebildet ist, um einen gewünschten Spalt zwischen einer Nut (502, 504, 604) in der ersten Dichtungsstruktur (200, 1700, 1824) und der zweiten Dichtungsstruktur (202, 1702, 1828) aufrechtzuerhalten.

6. Dornsystem (100, 1500, 1802) nach einem der Ansprüche 1-5, wobei die erste Dichtungsstruktur (200, 1700, 1824) und die zweite Dichtungsstruktur (202, 1702, 1828) eine horizontale Dichtungsebene (710, 1838) zwischen dem ersten Segment (1830) und dem zweiten Segment (1832) bilden.

7. Dornsystem (100, 1500, 1802) nach einem der Ansprüche 1-6, wobei das Verbindungssystem (1810) umfasst:
Ausrichtungsstifte (300, 302, 304, 306, 1818), die mit dem Rahmen (108, 1508, 1806) verbunden sind, wobei die Ausrichtungsstifte (300, 302, 304, 306, 1818) in Ausrichtungsmerkmale (1822) in den Segmenten (102, 104, 106, 1502, 1504, 1506, 1808) eingreifen.

8. Dornsystem (100, 1500, 1802) nach einem der Ansprüche 1-7, wobei das Verbindungssystem (1810) umfasst:
Klemmmechanismen (1820), die mit den Segmenten (102, 104, 106, 1502, 1504, 1506, 1808) verbunden sind, wobei die Klemmmechanismen (1820) betriebsfähig sind, um die Segmente (102, 104, 106, 1502, 1504, 1506, 1808) an dem Rahmen (108, 1508, 1806) zu befestigen, wenn die Segmente (102, 104, 106, 1502, 1504, 1506, 1808) auf dem Rahmen (108, 1508, 1806) ausgerichtet sind.

9. Verfahren zur Herstellung einer Verbundwerkstoffstruktur (1804), wobei das Verfahren umfasst:
Auswählen (1900) von Segmenten (102, 104, 106, 1502, 1504, 1506, 1808) für die Verbundwerkstoffstruktur (1804);
Verbinden (1902), unter Verwendung eines Verbindungssystems (1710), von Segmenten (102, 104, 106, 1502, 1504, 1506, 1808) mit einem Rahmen (108, 1508, 1806), wobei die Segmente (102, 104, 106, 1502, 1504, 1506, 1808) eine innere Formlinie (146, 1814) in einem Dornsystem (100, 1500, 1802) definieren, das geformt ist, um die Verbundwerkstoffstruktur (1804) herzustellen, wenn die Segmente (102, 104, 106, 1502, 1504, 1506, 1808) mit dem Rahmen (108, 1508, 1806) verbunden sind; und
Dichten (1904), unter Verwendung eines Dichtungssystems (1812), von Segment-an-Segment-Verbindungsstellen (112, 114, 1602, 1604, 1819) zwischen den Segmenten (102, 104, 106, 1502, 1504, 1506, 1808), wenn die Segmente (102, 104, 106, 1502, 1504, 1506, 1808) mit dem Rahmen (108, 1508, 1806) verbunden sind,
wobei das Dichtungssystem (1812) Folgendes umfasst:
eine erste Dichtungsstruktur (200, 1700, 1824) auf einem ersten Segment (1830) in den Segmenten (102, 104, 106, 1502, 1504, 1506, 1808);
einen Satz von Dichtungsnuten (1826) in der ersten Dichtungsstruktur (200, 1700, 1824); und
eine zweite Dichtungsstruktur (202, 1702, 1828) auf einem zweiten Segment (1832) in den Segmenten (102, 104, 106, 1502, 1504, 1506, 1808) im Dichtungssystem (1812), die die erste Dichtungsstruktur (200, 1700, 1824) kontaktiert, um eine Dichtung (204, 1704, 1834) zu bilden, wenn das erste Segment (1830) und das zweite Segment (1832) mit dem Rahmen (108, 1508, 1806) verbunden sind, und
eine Distanzscheibe (508, 800, 802, 804, 806, 1836) in mindestens einer von der ersten Dichtungsstruktur (200, 1700, 1824) oder der zweiten Dichtungsstruktur (202, 1702, 1828).

10. Verfahren nach Anspruch 9, weiter umfassend:
Auftragen (2000) von nicht ausgehärteten Verbundwerkstoffmaterialien auf die innere Formlinie (146, 1814), die von den mit dem Rahmen (108, 1508, 1806) verbundenen Segmenten (102, 104, 106, 1502, 1504, 1506, 1808) gebildet wird; und
Aushärten (2002) der nicht ausgehärteten Verbundwerkstoffmaterialien, die auf der inneren Formlinie (146, 1814) aufgetragen sind.

11. Verfahren nach Anspruch 9 oder 10, weiter umfassend:
Lösen (2100) der Segmente (102, 104, 106, 1502, 1504, 1506, 1808) vom Rahmen (108, 1408, 1806); und
Entfernen (2102) der Segmente (102, 104, 106, 1502, 1504, 1506, 1808) vom Rahmen (108, 1508, 1806), wenn die Segmente (102, 104, 106, 1502, 1504, 1506, 1808) gelöst sind.

12. Verfahren nach einem der Ansprüche 9-11, weiter umfassend:
Führen (2200), durch ein Luftstromverwaltungssystem (1846), das mit dem Rahmen (108, 1508, 1806) verbunden ist, eines Luftstroms (1848) zu einem Satz von Bereichen innerhalb der inneren Formlinie (146, 1814), sodass mindestens eines von gleichförmigem Erhitzen oder erhöhter Heizgeschwindigkeit beim Aushärten von nicht ausgehärteten Verbundwerkstoffmaterialien für die Verbundwerkstoffstruktur (1704), die auf der von den Segmenten (102, 104, 106, 1502, 1504, 1506, 1808) gebildeten inneren Formlinie (146, 1814) aufgetragen sind, erfolgt.

13. Verfahren nach einem der Ansprüche 9-12, weiter umfassend:
Bewegen, durch das Bewegungssystem (1858), des Rahmens (108, 1508, 1806) mit den Segmenten (102, 104, 106, 1502, 1504, 1506, 1808), die mit dem Rahmen (108, 1508, 1806) verbunden sind.

14. Verfahren nach einem der Ansprüche 9-13, wobei der Verbindungsschritt Folgendes umfasst:
Eingreifen von Ausrichtungsstiften (300, 302, 304, 306, 1818) mit Ausrichtungsmerkmalen (1822), wobei die Segmente (102, 104, 106, 1502, 1504, 1506, 1808) auf dem Rahmen (108, 1508, 1806) beim Verbinden, durch das Verbindungssystem (1810), der Segmente (102, 104, 106, 1502, 1504, 1506, 1808) mit dem Rahmen (108, 1508, 1806) ausgerichtet sind, sodass die Segmente (102, 104, 106, 1502, 1504, 1506, 1808) eine innere Formlinie (146, 1814) im Dornsystem (100, 1500, 1802) definieren, das geformt ist, um die Verbundwerkstoffstruktur (1804) herzustellen, wenn die Segmente (102, 104, 106, 1502, 1504, 1506, 1808) mit dem Rahmen (108, 1508, 1806) verbunden sind.

15. Verfahren nach einem der Ansprüche 9-14, wobei der Verbindungsschritt Folgendes umfasst:
Befestigen, durch Klemmmechanismen (1820), die mit den Segmenten (102, 104, 106, 1502, 1504, 1506, 1808) mit dem Rahmen (108, 1508, 1806) verbunden sind, der Segmente (102, 104, 106, 1502, 1504, 1506, 1808) an dem Rahmen (108, 1508, 1806), wenn die Segmente (102, 104, 106, 1502, 1504, 1506, 1808) auf dem Rahmen (108, 1508, 1806) ausgerichtet sind.

## Revendications

1. Système de mandrin (100, 1500, 1802) comprenant :
un bâti (108, 1508, 1806) ;
des segments (102, 104, 106, 1502, 1504, 1506, 1808) reliés au bâti (108, 1508, 1806), dans lequel les segments (102, 104, 106, 1502, 1504, 1506, 1808) fournissent une ligne de moulage interne (146, 1814) pour une structure composite (1804) ;
un système de liaison (1810) qui relie les segments (102, 104, 106, 1502, 1504, 1506, 1808) au bâti (108, 1508, 1806) ; et
un système d'étanchéité (1812) qui assure l'étanchéité de joints segment à segment (112, 114, 1602, 1604, 1819) au niveau d'emplacements où les segments (102, 104, 106, 1502, 1504, 1506, 1808) sont joints les uns aux autres,
dans lequel le système d'étanchéité (1812) comprend :
une première structure d'étanchéité (200, 1700, 1824) sur un premier segment (1830) parmi les segments (102, 104, 106, 1502, 1504, 1506, 1808) ; un ensemble de rainures d'étanchéité (1826) dans la première structure d'étanchéité (200, 1700, 1824) ;
une seconde structure d'étanchéité (202, 1602, 1828) sur un second segment (1832) parmi les segments (102, 104, 106, 1502, 1504, 1506, 1808) dans le système d'étanchéité (1812) qui vient au contact de la première structure d'étanchéité (200, 1700, 1824) pour former une étanchéité (204, 1704, 1834) lorsque le premier segment (1830) et le second segment (1832) sont reliés au bâti (108, 1508, 1806) et
une cale (508, 800, 802, 804, 806, 1836) dans au moins l'une de la première structure d'étanchéité (200, 1700, 1824) ou la seconde structure d'étanchéité (202, 1702, 1828).

2. Système de mandrin (100, 1500, 1802) selon la revendication 1, comprenant en outre :
un système de gestion de flux d'air (1846) relié au bâti (108, 1508, 1806), dans lequel le système de gestion de flux d'air (1846) est configuré pour guider un flux d'air (1848) vers un ensemble de zones dans la ligne de moulage interne (146, 1814) de sorte qu'au moins l'un(e) d'un chauffage uniforme ou d'une vitesse de chauffage accrue se produise lors du durcissement de matériaux composites non durcis pour la structure composite (1804) déposés sur la ligne de moulage interne (146, 1814) formée par les segments (102, 104, 106, 1502, 1504, 1506, 1808).

3. Système de mandrin (100, 1500, 1802) selon la revendication 1 ou la revendication 2, comprenant en outre :
un système de déplacement (1858) relié au bâti (108, 1508, 1806), dans lequel le système de déplacement (1858) fonctionne pour déplacer le bâti (108, 1508, 1806) avec les segments (102, 104, 106, 1502, 1504, 1506, 1808) reliés au bâti (108, 1508, 1806).

4. Système de mandrin (100, 1500, 1802) selon l'une quelconque des revendications 1 à 3, dans lequel la cale (508, 800, 802, 804, 806, 1836) est comprise dans la première structure d'étanchéité (200, 1700, 1824), dans lequel la cale (508, 800, 802, 804, 806, 1836) présente un niveau de dureté supérieur à celui de la seconde structure d'étanchéité (202, 1702, 1828).

5. Système de mandrin (100, 1500, 1820) selon la revendication 4, dans lequel la cale (508, 800, 802, 804, 806, 1836) s'étend au-dessus d'un plan pour la première structure d'étanchéité et est configurée pour maintenir un écart souhaité entre une rainure (502, 504, 604) dans la première structure d'étanchéité (200, 1700, 1824) et la seconde structure d'étanchéité (202, 1702, 1828).

6. Système de mandrin (100, 1500, 1802) selon l'une quelconque des revendications 1 à 5, dans lequel la première structure d'étanchéité (200, 1700, 1824) et la seconde structure d'étanchéité (202, 1702, 1828) forment un plan d'étanchéité horizontal (710, 1838) entre le premier segment (1830) et le second segment (1832).

7. Système de mandrin (100, 1500, 1802) selon l'une quelconque des revendications 1 à 6, dans lequel le système de liaison (1810) comprend :
des broches d'alignement (300, 302, 304, 306, 1818) reliées au bâti (108, 1508, 1806), dans lequel les broches d'alignement (300, 302, 304, 306, 1818) viennent en prise avec des éléments d'alignement (1822) dans les segments (102, 104, 106, 1502, 1504, 1506, 1808).

8. Système de mandrin (100, 1500, 1802) selon l'une quelconque des revendications 1 à 7, dans lequel le système de liaison (1810) comprend :
des mécanismes de serrage (1820) reliés aux segments (102, 104, 106, 1502, 1504, 1506, 1808), lesdits mécanismes de serrage (1820) fonctionnant pour fixer les segments (102, 104, 106, 1502, 1504, 1506, 1808) au bâti (108, 1508, 1806) lorsque les segments (102, 104, 106, 1502, 1504, 1506, 1808) sont alignés sur le bâti (108, 1508, 1806).

9. Procédé pour former une structure composite (1804), le procédé comprenant :
la sélection (1900) de segments (102, 104, 106, 1502, 1504, 1506, 1808) pour la structure composite (1804) ;
la liaison (1902), à l'aide d'un système de liaison (1710), de segments (102, 104, 106, 1502, 1504, 1506, 1808) à un bâti (108, 1508, 1806), dans lequel les segments (102, 104, 106, 1502, 1504, 1506, 1808) définissent une ligne de moulage interne (146, 1814) dans un système de mandrin (100, 1500, 1802) formé pour fabriquer la structure composite (1804) lorsque les segments (102, 104, 106, 1502, 1504, 1506, 1808) sont reliés au bâti (108, 1508, 1806) ; et
l'étanchéification (1904), à l'aide d'un système d'étanchéité (1812), de joints segment à segment (112, 114, 1602, 1604, 1819) entre les segments (102, 104, 106, 1502, 1504, 1506, 1808) lorsque les segments (102, 104, 106, 1502, 1504, 1506, 1808) sont reliés au bâti (108, 1508, 1806),
dans lequel le système d'étanchéité (1812) comprend :
une première structure d'étanchéité (200, 1700, 1824) sur un premier segment (1830) parmi les segments (102, 104, 106, 1502, 1504, 1506, 1808) ;
un ensemble de rainures d'étanchéité (1826) dans la première structure d'étanchéité (200, 1700, 1824) ; et
une seconde structure d'étanchéité (202, 1702, 1828) sur un second segment (1832) parmi les segments (102, 104, 106, 1502, 1504, 1506, 1808) dans le système d'étanchéité (1812), qui vient en contact avec la première structure d'étanchéité (200, 1700, 1824) pour former une étanchéité (204, 1704, 1834) lorsque le premier segment (1830) et le second segment (1832) sont reliés au bâti (108, 1508, 1806) et
une cale (508, 800, 802, 804, 806, 1836) dans au moins l'une de la première structure d'étanchéité (200, 1700, 1824) ou la seconde structure d'étanchéité (202, 1702, 1828).

10. Procédé selon la revendication 9, comprenant en outre :
le dépôt (2000) de matériaux composites non durcis sur la ligne de moulage interne (146, 1814) formée par les segments (102, 104, 106, 1502, 1504, 1506, 1808) reliés au bâti (108, 1508, 1806) ; et
le durcissement (2002) des matériaux composites non durcis déposés sur la ligne de moulage interne (146, 1814).

11. Procédé selon la revendication 9 ou la revendication 10, comprenant en outre :
la désolidarisation (2100) des segments (102, 104, 106, 1502, 1504, 1506, 1808) du bâti (108, 1408, 1806) ; et
le retrait (2102) des segments (102, 104, 106, 1502, 1504, 1506, 1808) du bâti (108, 1508, 1806) lorsque les segments (102, 104, 106, 1502, 1504, 1506, 1808) sont désolidarisés.

12. Procédé selon l'une quelconque des revendications 9 à 11, comprenant en outre :
le guidage (2200), par un système de gestion de flux d'air (1846) relié au bâti (108, 1508, 1806), d'un flux d'air (1848) vers un ensemble de zones dans la ligne de moulage interne (146, 1814) de sorte qu'au moins l'un(e) d'un chauffage uniforme ou d'une vitesse de chauffage accrue se produise lors du durcissement de matériaux composites non durcis pour la structure composite (1704) déposés sur la ligne de moulage interne (146, 1814) formée par les segments (102, 104, 106, 1502, 1504, 1506, 1808).

13. Procédé selon l'une quelconque des revendications 9 à 12, comprenant en outre :
le déplacement, par un système de déplacement (1858), du bâti (108, 1508, 1806) avec les segments (102, 104, 106, 1502, 1504, 1506, 1808) reliés au bâti (108, 1508, 1806).

14. Procédé selon l'une quelconque des revendications 9 à 13, dans lequel l'étape de liaison comprend :
la mise en prise de broches d'alignement (300, 302, 304, 306, 1818) avec des éléments d'alignement (1822), dans lequel les segments (102, 104, 106, 1502, 1504, 1506, 1808) sont alignés sur le bâti (108, 1508, 1806) lors de la liaison, par le système de liaison (1810), des segments (102, 104, 106, 1502, 1504, 1506, 1808) au bâti (108, 1508, 1806) de sorte que des segments (102, 104, 106, 1502, 1504, 1506, 1808) définissent la ligne de moulage interne (146, 1814) dans le système de mandrin (100, 1500, 1802) formé pour fabriquer la structure composite (1804) lorsque les segments (102, 104, 106, 1502, 1504, 1506, 1808) sont reliés au bâti (108, 1508, 1806).

15. Procédé selon l'une quelconque des revendications 9 à 14, dans lequel l'étape de liaison comprend :
la fixation, par des mécanismes de serrage (1820) reliés aux segments (102, 104, 106, 1502, 1504, 1506, 1808) au bâti (108, 1508, 1806), des segments (102, 104, 106, 1502, 1504, 1506, 1808) au bâti (108, 1508, 1806) lorsque les segments (102, 104, 106, 1502, 1504, 1506, 1808) sont alignés sur le bâti (108, 1508, 1806).
